# EUROPEAN PATENT APPLICATION

(11) **EP 3 270 634 A1**
(43) Date of publication of application: **17.01.2018**
(21) Application number: 15886988.3
(22) Date of filing: 03.04.2015
(51) Int. Cl.: H04W 40/22, H04W 88/04

(54) **DATA TRANSMISSION METHOD, USER EQUIPMENT AND BASE STATION**

(71) Applicant: Huawei Technologies Co., Ltd., Longgang District Shenzhen, Guangdong 518129 (CN)
(72) Inventor: LI, Yajuan, Shenzhen Guangdong 518129 (CN); LI, Chao, Shenzhen Guangdong 518129 (CN); ZHANG, Xingwei, Shenzhen Guangdong 518129 (CN); CAO, Zhenzhen, Shenzhen Guangdong 518129 (CN); WANG, Hong, Shenzhen Guangdong 518129 (CN)
(74) Representative: Thun, Clemens
(86) International application number: PCT/CN2015/075917
(87) International publication number: WO 2016/155018

(57) **Abstract**

Embodiments of the present invention provide a data transmission method, including: receiving, by first user equipment UE, a first message sent by second UE, where the first message includes indication information that the second UE is capable of acting as relay UE; and performing, by the first UE, data transmission with a base station via the second UE, where the second UE acts as relay UE. In the embodiments of the present invention, when first UE is unable to directly perform data transmission with a base station, the first UE uses second UE as relay UE according to indication information sent by the second UE that the second UE is capable of acting as relay UE, and then is unable to perform data transmission via the relay UE. Therefore, a success rate of data transmission can be ensured, and further transmission efficiency can be increased.

## Description

### TECHNICAL FIELD

Embodiments of the present invention relate to the communications field, and more specifically, to a data transmission method, user equipment, and a base station.

### BACKGROUND

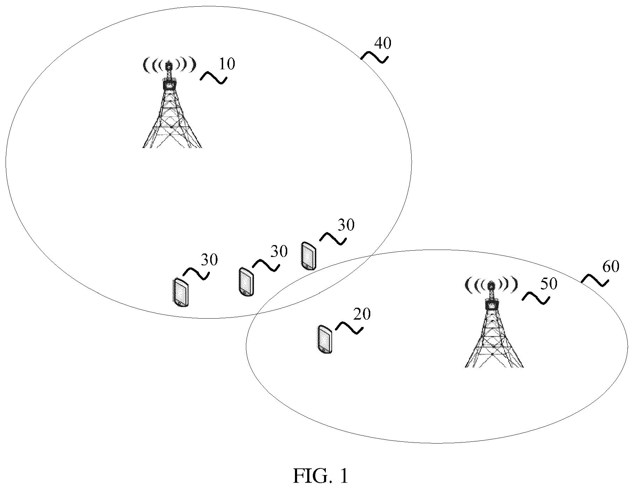

A base station can perform, by using a cellular link, data communication with user equipment (User Equipment, UE) located in a cell of the base station. As shown in FIG. 1, UE 30 is located in a cell 40 of a base station 10, and then uplink and downlink data is transmitted between the base station 10 and the UE 30 by using a cellular link.

However, because UE 20 is located in a cell 60 of a base station 50, data communication cannot be directly performed between the base station 10 and the UE 20. Instead, the data transmission between the base station 10 and the UE 20 needs to be performed via the base station 50. For example, if the UE 20 needs to send uplink data to the base station 10, the UE 20 first needs to send the uplink data to the base station 50 by using a cellular link, and then the base station 50 forwards the uplink data to the base station 10. For example, if the base station 10 needs to send downlink data to the UE 20, the base station 10 first needs to send the downlink data to the base station 50, and then the base station 50 forwards the downlink data to the UE 20 by using a cellular link.

In this way, not only cellular link congestion is caused, but also a delay of data transmission is long. Consequently, data transmission efficiency is low.

### SUMMARY

Embodiments of the present invention provide a data transmission method, which can ensure efficiency of data transmission.

According to a first aspect, a data transmission method is provided, including:
receiving, by first user equipment UE, a first message sent by second UE, where the first message includes indication information that the second UE is capable of acting as relay UE; and
performing, by the first UE, data transmission with a base station via the second UE, where the second UE acts as relay UE.

According to a second aspect, a data transmission method is provided, including:
receiving, by second user equipment UE, a relay request message sent by first UE or a base station, where the relay request message indicates that the first UE needs an assistance relay service;
determining, by the second UE according to the relay request message, that the second UE is capable of acting as relay UE for the first UE; and
acting, by the second UE, as relay UE to assist the first UE to perform data transmission with the base station.

According to a third aspect, a data transmission method is provided, including:
receiving, by a base station, a relay request message sent by first UE;
forwarding, by the base station, the relay request message to second UE, to instruct the second UE to act as relay UE; and
performing, by the base station, data transmission with the first UE via the second UE.

According to a fourth aspect, user equipment is provided, where the user equipment UE is first UE, and includes:
a receiving unit, configured to receive a first message sent by second UE, where the first message includes indication information that the second UE is capable of acting as relay UE; and
a processing unit, configured to perform data transmission with a base station via the second UE, where the second UE acts as relay UE.

According to a fifth aspect, user equipment is provided, where the user equipment UE is second UE, and includes:
a receiving unit, configured for the UE to receive a relay request message sent by first UE or a base station, where the relay request message indicates that the first UE needs an assistance relay service; and
a processing unit, configured to determine, according to the relay request message, that the second UE is capable of acting as relay UE for the first UE, where
the processing unit is further configured to use the second UE as relay UE to assist the first UE to perform data transmission with the base station.

According to a sixth aspect, a base station is provided, including:
a receiving unit, configured to receive a relay request message sent by first UE;
a sending unit, configured to forward the relay request message to second UE, to instruct the second UE to act as relay UE; and
a processing unit, configured to perform data transmission with the first UE via the second UE.

According to a seventh aspect, user equipment is provided, where the user equipment UE is first UE, and includes:
a receiver, configured to receive a first message sent by second UE, where the first message includes indication information that the second UE is capable of acting as relay UE; and
a processor, configured to perform data transmission with a base station via the second UE, where the second UE acts as relay UE.

According to an eighth aspect, user equipment is provided, where the user equipment UE is second UE, and includes:
a receiver, configured for the UE to receive a relay request message sent by first UE or a base station, where the relay request message indicates that the first UE needs an assistance relay service; and
a processor, configured to determine, according to the relay request message, that the second UE is capable of acting as relay UE for the first UE, where
the processor is further configured to use the second UE as relay UE to assist the first UE to perform data transmission with the base station.

According to a ninth aspect, a base station is provided, including:
a receiver, configured to receive a relay request message sent by first UE;
a transmitter, configured to forward the relay request message to second UE, to instruct the second UE to act as relay UE; and
a processor, configured to perform data transmission with the first UE via the second UE.

In the embodiments of the present invention, when first UE is unable to directly perform data transmission with a base station, the first UE uses second UE as relay UE according to indication information sent by the second UE that the second UE is capable of acting as relay UE, and then is unable to perform data transmission via the relay UE. Therefore, a success rate of data transmission can be ensured, and further transmission efficiency can be increased.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a scenario described in the background;
FIG. 2 is a schematic diagram of an application scenario according to an embodiment of the present invention;
FIG. 3 is an interaction flowchart of a data transmission method according to an embodiment of the present invention;
FIG. 4 is an interaction flowchart of a method for releasing a relay connection according to an embodiment of the present invention;
FIG. 5 is an interaction flowchart of a method for releasing a relay connection according to another embodiment of the present invention;
FIG. 6 is an interaction flowchart of a method for releasing a relay connection according to another embodiment of the present invention;
FIG. 7 is an interaction flowchart of a method for releasing a relay connection according to another embodiment of the present invention;
FIG. 8 is an interaction flowchart of a method for releasing a relay connection according to another embodiment of the present invention;
FIG. 9 is an interaction flowchart of a data transmission method according to another embodiment of the present invention;
FIG. 10 is an interaction flowchart of a data transmission method according to another embodiment of the present invention;
FIG. 11 is an interaction flowchart of a data transmission method according to another embodiment of the present invention;
FIG. 12 is an interaction flowchart of a data transmission method according to another embodiment of the present invention;
FIG. 13 is an interaction flowchart of a data transmission method according to another embodiment of the present invention;
FIG. 14 is a flowchart of a data transmission method according to an embodiment of the present invention;
FIG. 15 is a flowchart of a data transmission method according to another embodiment of the present invention;
FIG. 16 is a flowchart of a data transmission method according to another embodiment of the present invention;
FIG. 17 is a structural block diagram of user equipment according to an embodiment of the present invention;
FIG. 18 is a structural block diagram of user equipment according to another embodiment of the present invention;
FIG. 19 is a structural block diagram of user equipment according to another embodiment of the present invention;
FIG. 20 is a structural block diagram of user equipment according to another embodiment of the present invention;
FIG. 21 is a structural block diagram of a base station according to an embodiment of the present invention; and
FIG. 22 is a structural block diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, including a Global System for Mobile Communications (Global System for Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS) system, a Long Term Evolution (Long Term Evolution, LTE) system, an LTE frequency division duplex (Frequency Division Duplex, FDD) system, an LTE time division duplex (Time Division Duplex, TDD) system, and a Universal Mobile Telecommunications System (Universal Mobile Telecommunication System, UMTS).

It should further be understood that, in the embodiments of the present invention, a base station may be a base station (Base Transceiver Station, BTS) in GSM or CDMA, or may be a base station (NodeB, NB) in WCDMA, or may be an evolved NodeB (Evolutional Node B, eNB, or eNodeB) in LTE or a base station device in a future 5G network. This is not limited in the present invention.

It should be further understood that, in the embodiments of the present invention, UE may perform communication with one or more core networks (Core Network) via a radio access network (Radio Access Network, RAN). The UE may be referred to as an access terminal, a terminal device, a user unit, a user site, a mobile site, a mobile station, a remote station, a remote terminal, a mobile device, a user terminal, a terminal, a wireless communications device, a user proxy, or a user apparatus. The UE may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, or a terminal device in a future 5G network.

Device to device communication is a direct communication technology. Data exchanged between UEs does not need to be forwarded by a base station. The UEs may interact directly or interact directly with the assistance of a network.

Device to device communication has three working scenarios, which are respectively: an in-coverage working scenario, an out-of-coverage working scenario, and a partial-in-coverage working scenario. In the in-coverage working scenario, all user equipments participating in device to device communication are located within a service range of the base station. In the out-of-coverage scenario, all user equipments participating in device to device communication are located outside the service range of the base station. In the partial-in-coverage scenario, some user equipments participating in device to device communication are located within the service range of the base station, and other user equipments are located outside the service range of the base station.

Device to device communication includes device to device (Device to Device, D2D) discovery (D2D discovery) and D2D communication (D2D communication).

D2D discovery means that user equipment sends a discovery message (discovery message), and another user equipment obtains, by reading the discovery message, information about the user equipment that sends the discovery message. The discovery message may include identification information such as an identity (identity) of the user equipment that sends the discovery message.

D2D discovery includes two types (type): type 1 (type 1) and type 2 (type 2). Type 1 means that resource pools of multiple user equipments for D2D discovery (which may also be referred to as resource pools for type-1 D2D discovery) are configured or selected by users themselves. Type 2 means that a sending resource of one user equipment for D2D discovery is configured by the base station.

D2D communication means that user equipment sends control information and data, and another user equipment obtains information such as a sending format of subsequent data by reading the control information, so as to correctly receive the subsequent data.

D2D communication includes two modes (mode): mode 1 (mode 1) and mode 2 (mode 2). Mode 1 means that a base station or a relay (relay) node schedules a resource that is used by user equipment to transmit data and control information that are of device to device communication. Specifically, the control information may be a scheduling assignment (Scheduling Assignment, SA) message. In the mode 1 of D2D communication, a base station indicates, by using downlink signaling, a resource, a format, or the like that is used by user equipment to send scheduling assignment and data. Mode 2 means that user equipment selects, from a resource pool (the resource pool may be referred to as a resource pool for mode-2 D2D communication), a resource used to transmit data and a SA message that are of direct communication. The resource pool for mode-2 D2D communication may include a SA message resource pool and a resource pool for data corresponding to the SA message. In other words, the user equipment may select, from the SA message resource pool, a resource used to transmit the SA message, and select, from the resource pool for the data corresponding to the SA message, a resource used to transmit the data corresponding to the SA message. The resource pool is a group of communication resources, which is a set of multiple communication resources.

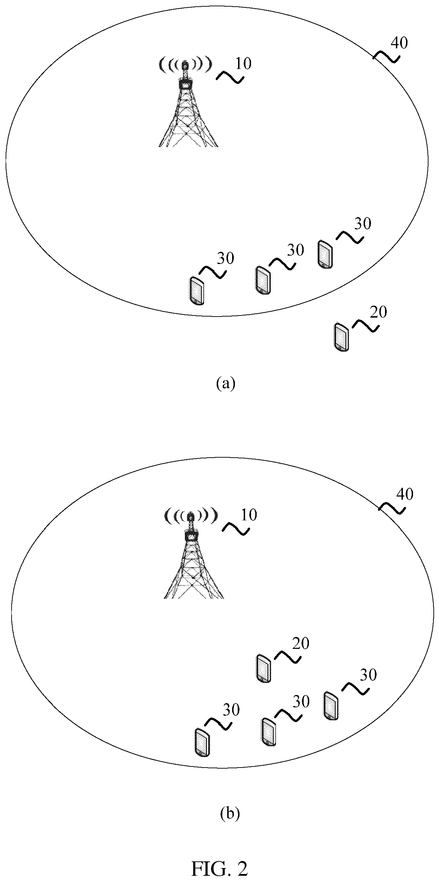

FIG. 2 is a schematic diagram of an application scenario according to an embodiment of the present invention. Specifically, this embodiment of the present invention is mainly used to implement data communication between a base station 10 and UE 20. In addition, FIG. 2 further shows UE 30 located in a cell 40 of the base station 10. That is, the base station 10 is a serving base station of the UE 30. In addition, in this embodiment of the present invention, it is assumed that D2D communication can be performed between the UE 20 and the UE 30.

As shown in FIG. 2(a), the UE 20 is located outside the cell 40 of the base station 10. It is assumed that the UE 20 is initially located in the cell 40 of the base station 10; and subsequently, due to a location change, the UE 20 moves to the outside of the cell 40, and consequently is unable to directly perform communication with the base station 10. In this case, the UE 30 may act as relay UE, to assist in data transmission between the UE 20 and the base station 10. In this case, the UE 20 may be referred to as remote UE (remote UE), and the UE 30 that acts as a relay may be referred to as relay UE (relay UE).

In this embodiment of the present invention, meanings of descriptions in that the UE 20 that acts as the remote UE is not located in a cell of the base station 10, or that the UE 20 is not located within a coverage range of the base station, or that the UE 20 is not located within a service range of the base station 10 are consistent.

It may be understood that, D2D communication between the UE 20 and the UE 30 that are shown in FIG. 2(a) is a partial-in-coverage (partial-in-coverage) scenario.

As shown in FIG. 2(b), although the UE 20 is located within a cell of the base station 10 in space, due to another reason, the UE 20 is unable to normally perform communication with the base station 10. For example, a fault occurs in a cellular link between the UE 20 and the base station 10. For another example, an electricity quantity of the UE 20 is excessively small. For still another example, although the UE 20 is located inside the cell in space, signal quality between the UE 20 and the base station 10 is excessively low (for example, the UE 20 is located in a basement whose network signal is relatively poor). There are still other examples. In this case, the UE 30 may also act as relay UE, to assist in the data transmission between the UE 20 and the base station 10.

It may be understood that, D2D communication between the UE 20 and the UE 30 that are shown in FIG. 2(b) is an in-coverage (in-coverage) scenario.

In this way, in the scenarios shown in FIG. 2, one or more UEs 30 may act as relay nodes, and therefore, direct links between the UE 20 and the base station 10 are at least two links. It should be understood that, relay networks are an important direction towards satisfying increasing requirements of a communications system for high-frequency utilization and a high data transmission capability.

A method for selecting relay UE in the application scenario and a method for further performing data transmission method via the relay UE are described in detail in subsequent embodiments of the present invention.

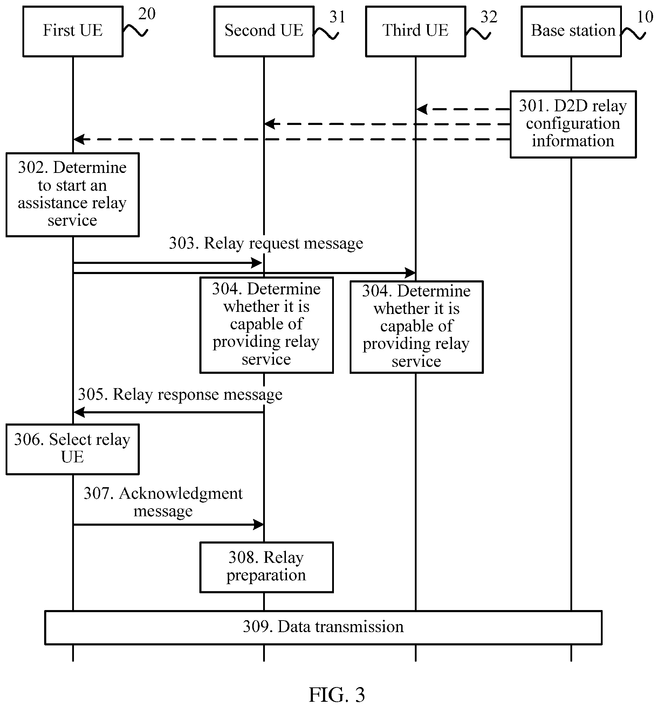

FIG. 3 is an interaction flowchart of a data transmission method according to an embodiment of the present invention. FIG. 3 shows a base station 10, first UE 20, second UE 31, and third UE 32.

The base station 10 may be considered as the base station 10 in FIG. 2. The first UE 20 may be considered as the UE 20 in FIG. 2(a) or FIG. 2(b). The second UE 31 may be considered as one of the UEs 30 in FIG. 2. The third UE 32 may be considered as another one of the UEs 30 in FIG. 2. The second UE 31 and the third UE 32 are located in a cell of the base station 10. That is, the base station 10 is a serving base station of the second UE 31 and the third UE 32. In addition, the first UE 20 may perform D2D communication with the second UE 31. The first UE 20 may perform D2D communication with the third UE 32. The second UE 31 may perform communication with the base station 10 by using a cellular link. The third UE 32 may perform communication with the base station 10 by using a cellular link.

In this embodiment of the present invention, it is assumed that the first UE 20 initially can normally perform communication with the base station 10, and subsequently, due to a reason (for example, a fault occurs in a cellular link between the first UE 20 and the base station 10. For example, the first UE 20 moves to the outside of a service range of the base station 10), the first UE 20 is unable to perform communication with the base station 10.

301: The base station 10 sends D2D relay configuration information.

Specifically, the base station 10 may send the D2D relay configuration information at a specified time or periodically in a broadcast manner or by using dedicated signaling. For example, the dedicated signaling may be radio resource control (Radio Resource Control, RRC) signaling.

The D2D relay configuration information includes a parameter related to D2D UE relay configuration. For example, the parameter may include a parameter needed to start an assistance relay service.

In this embodiment of the present invention, the parameter related to the D2D UE relay configuration may include: a D2D resource pool used by relay UE, a parameter related to a condition for starting D2D relay by remote UE, a parameter related to a D2D relay task borne by relay UE, or the like.

For example, the D2D relay configuration information may include a signal quality limit (which may be referred to as a first threshold herein) of cellular transmission, or may include a quantity of times of retransmission (which may be referred to as a second threshold herein) for which the remote UE sends a relay request message, or may include a limit (which may be referred to as a third threshold herein) of a remaining electricity quantity for performing relay by the relay UE.

It may be understood that, the D2D relay configuration information may be received by all UEs located within the service range of the base station 10. It may be understood that, the first UE 20, the second UE 31, and the third UE 32 can all receive the D2D relay configuration information.

The D2D resource pool mainly means a resource pool that may be used for D2D communication and that is within a coverage range of a base station. UE may obtain the resource pool in two manners: one manner is that the base station broadcasts the D2D resource pool in a broadcast manner, and the other manner is that the base station configures the resource pool for the UE by using RRC signaling. In addition, the relay UE may obtain a transmission resource in the D2D resource pool in two manners: one manner is that the base station schedules the transmission resource in the resource pool, and the other manner is that the UE selects the transmission resource in the resource pool.

302: The first UE 20 determines to start an assistance relay service.

Specifically, when the first UE 20 is unable to directly perform data transmission with the base station 10, the first UE 20 determines to start the assistance relay service.

For example, the assistance relay service may be started in any one of the following cases:
(1) The first UE 20 is not located within the coverage range of the base station 10, and consequently is unable to directly send data to the base station 10.
   This case may be a location change of the first UE 20. That is, the first UE 20 moves from the inside of an in-coverage range of the base station 10 to the outside of the in-coverage range.
(2) The first UE 20 detects that signal quality between the first UE 20 and the base station 10 is less than a preset signal quality threshold, and consequently the first UE 20 is unable to directly send data to the base station 10.
   Optionally, the signal quality threshold herein may be the signal quality limit (that is, the first threshold) included in the D2D relay configuration information in 301.
   It may be understood that, usually, when the first UE 20 detects that the signal quality between the first UE 20 and the base station 10 is excessively poor, the first UE 20 attempts to search for a new cell whose signal quality is better, and performs cell switching. Therefore, optionally, that herein the first UE 20 detects that the signal quality between the first UE 20 and the base station 10 is lower than the preset signal quality threshold may refer to that the first UE 20 detects that the signal quality between the first UE 20 and the base station 10 is lower than the preset signal quality threshold and the first UE 20 does not find a cell that satisfies a switching condition.
(3) An electricity quantity of the first UE 20 is less than a preset electricity quantity threshold, and consequently is insufficient for sending data to the base station 10.
(4) The first UE 20 is unable to normally camp on or access a cell, or the first UE 20 is unable to normally establish an RRC connection to the base station 10, and consequently is unable to directly send data to the base station 10.

For example, access to a cell is forbidden or a service of a cell is restricted, and consequently the first UE 20 is unable to normally establish an RRC connection.

This case may be caused due to cell barred, cell unavailable, or other reasons. The first UE neither can normally camp on or access a cell, nor can camp on or access another cell.

For another example, a radio link failure (Radio Link Failure, RLF) occurs in the first UE 20, RRC reestablishment cannot be completed, and a cell cannot be reselected. Consequently, the first UE 20 is unable to normally establish an RRC connection.

It may be understood that, in another case in which data cannot be directly sent to the base station 10, the first UE 20 may determine to start the assistance relay service.

303: The first UE 20 sends a relay request message.

Specifically, the first UE 20 sends the relay request message (relay request message) in a D2D broadcast manner. In this way, all UEs that can perform D2D communication with the first UE 20 can receive the relay request message.

Optionally, the first UE 20 may determine transmit power of the relay request message according to reference signal received power (Reference Signal Received Power, RSRP). Alternatively, the first UE 20 may send the relay request message at maximum transmit power. The maximum transmit power herein is determined in a D2D sending resource pool, or may be maximum transmit power of the UE.

Optionally, the first UE 20 may send the relay request message by using a pre-configured D2D resource pool. Alternatively, the first UE 20 may send the relay request message by using a D2D resource pool. For example, when the first UE is located outside coverage of a base station and starts D2D relay, the first UE needs to use the pre-configured D2D resource pool. When the first UE starts the D2D relay due to a reason such as an insufficient electricity quantity, the first UE uses a D2D resource pool. The D2D resource pool is a D2D communication resource used by UE that is located within the coverage of the base station, and is obtained in two manners: one manner is a system message broadcast, and the other manner is configuration through RRC signaling.

In this embodiment of the present invention, the relay request message includes a source address and a destination address of data that needs assistance relay and that is of the first UE 20. For example, the source address may be an ID of the first UE 20. The destination address may be an ID of the base station 10 or an ID (cell ID) of a cell of the base station 10.

For example, the ID of the cell may be a global cell identity (EUTRAN Cell Global ID, ECGI).

Optionally, the relay request message may further include at least one of the following: indication information of data that needs assistance relay, a magnitude of a data amount of data that needs assistance relay, a buffer size of data that needs assistance relay, a service type of data that needs assistance relay, an ID of relay UE to be preferentially selected, an ID of a cell on which the first UE 20 last camps, an ID of a base station of a cell on which the first UE 20 last camps, or a target ID of group communication.

If a cell on which the first UE 20 currently camps can be determined, the cell on which the first UE 20 last camps is the cell on which the first UE 20 currently camps. If the first UE 20 currently camps on no cell, the cell on which the first UE 20 last camps is a cell on which the first UE 20 last camps before a current moment.

The target ID of the group communication is a group ID (Group ID).

In addition, the relay request message may further include a data direction of the data that needs assistance relay, and the data direction may be uplink and/or downlink.

In addition, the relay request message may further include a service type that needs assistance relay. For example, the service type may be directly performing communication with the base station 10 or indirectly performing communication with the base station 10 via another base station.

Optionally, a timer may be started at the same time when the first UE 20 sends the relay request message. It is assumed that duration that is set by the timer is T1. In this case, if no relay response message corresponding to the relay request message is received during the time period T1 after 303, the first UE 20 may retransmit the relay request message. The quantity of times of retransmission herein may be preset, or may be (that is, the second threshold) included in the D2D relay configuration information in 301. Herein, T1 may be zero.

It may be understood that, if after a quantity of times of sending a relay request message reaches the quantity of times of retransmission, the first UE 20 still receives no relay response message corresponding to the relay request message, it indicates that no available relay UE is around the first UE 20. In this case, the first UE may send another relay request message after an interval of T1', where T1' is configured in the relay configuration information in 301. Alternatively, the first UE searches for an available cell after an interval. If no available cell can be found, the first UE searches for available relay UE again by sending a relay request message.

304: UE that receives the relay request message sent by the first UE 20 determines whether the UE is capable of providing a relay service.

Specifically, FIG. 3 shows that the second UE 31 and the third UE 32 determine whether they are capable of providing a relay service for the first UE 20.

It may be also understood as that the UE that receives the relay request message sent by the first UE 20 performs self assessment.

Specifically, in this embodiment, the second UE 31 and the third UE 32 may determine, according to respective network statuses and relay service statuses and according to content included in the relay request message, whether they are capable of providing a relay service for the first UE 20.

For example, the determining may include: whether the second UE 31 and the third UE 32 are in an idle (Idle) state or a connected (connected) state; whether an RRC connection has been established; if no RRC connection has been established, whether an RRC connection can be established; whether quality of a cellular channel to the base station 10 satisfies a condition (whether it can be ensured that data is transmitted to a specified destination address for the first UE 20); whether there is remaining power (a threshold may be pre-configured or configured, and in addition, assessment may be performed according to a last PHR report result, or an average of several last PHR report results may be found, or assessment may be performed according to another value of UE); whether a remaining electricity quantity is greater than a threshold (which may be pre-configured, or may be (that is, the third threshold) included in the D2D relay configuration information in 301); whether a type of a service that can be provided satisfies a requirement of the first UE 20 (for example, whether communication can be directly performed with the base station 10); or whether a relay capability satisfies a requirement (for example, a service priority, or a limit on a connection quantity of the first UE 20) of the first UE 20; whether buffer (buffer) space is sufficient for storing the data that needs assistance relay and that is of the first UE 20.

Whether the buffer (buffer) space is sufficient for storing the data that needs assistance relay and that is of the first UE 20 may be determined according to the buffer size of the data that needs assistance relay and that is included in the relay request message. Whether the type of the service that can be provided satisfies the requirement of the first UE 20 may be determined according to a type of a service that needs assistance relay, where the type is included in the relay request message. A size of the buffer space may be pre-configured or may be a threshold configured in 301.

For example, if the UE that performs the determining in 304 detects that signal quality of the UE that performs the determining is less than a first signal quality threshold, it indicates that the UE is an edge UE of a serving cell of the UE. If the UE that performs the determining in 304 detects that signal quality of the UE that performs the determining is greater than a second signal quality threshold, it indicates that the UE satisfies a communication condition of acting as relay UE. The first signal quality threshold and the second signal quality threshold may be pre-configured, or may be included in the D2D relay configuration information in 301.

It may be understood that, a criterion for performing self assessment in 304 may combine the multiple criteria listed above. That is, it can be determined, only when the multiple criteria are satisfied, that the UE is capable of providing a relay service for the first UE 20.

After the self assessment is performed, if the UE that receives the relay request message sent by the first UE 20 determines that the relay service cannot be provided for the first UE 20, the UE may send a relay refusing message to the first UE 20, or may send no message.

After the self assessment is performed, if the UE that receives the relay request message sent by the first UE 20 determines that the UE is capable of providing a relay service for the first UE 20, the UE may send a relay response message to the first UE 20.

It may be understood that, there may be multiple UEs that determine that they are capable of providing a relay service for the first UE 20.

In this embodiment of the present invention, it is assumed that if after performing self assessment, the second UE 31 determines that it is capable of providing a relay service for the first UE 20, 305 is performed.

305: Second UE 31 sends a relay response message.

Optionally, the second UE 31 may send the relay response message to the first UE 20 by using a D2D link between the second UE 31 and the first UE 20.

Alternatively, optionally, the second UE 31 may send a relay response message in a D2D broadcast manner. In this way, after receiving the relay response message sent by the second UE 31, another UE that determines that the another UE is capable of providing a relay service for the first UE 20 may not send another relay response message to the first UE 20.

In this embodiment, it is assumed that after performing self assessment, another fourth UE determines that the another fourth UE is capable of providing a relay service for the first UE 20, but the relay response message that is sent by the second UE 31 in a D2D broadcast manner is received by the fourth UE in 305 before the fourth UE sends a relay response message to the first UE 20. In this case, the fourth UE does not send a relay response message to the first UE 20. In this way, a D2D transmission resource can be saved.

However, it may be understood that, there is such a case: it is assumed that D2D communication can be performed between fifth UE and the first UE 20, but D2D communication is unable to be performed between the fifth UE and the second UE 31. In this case, even if the first UE 31 sends a relay response message in a D2D broadcast manner, the fifth UE is unable to receive the relay response message. Therefore, if after performing self assessment, the fifth UE is capable of providing a relay service for the first UE 20, the fifth UE sends a relay response message to the first UE 31 (in an end-to-end form, or in a D2D broadcast manner).

Optionally, the relay response message sent by the second UE 31 may include at least one of the following: quality information of a channel between the second UE and the base station, quality information of a D2D channel between the second UE and the first UE, a current relay service status of the second UE, a parameter for establishing a D2D connection between the first UE and the second UE, an ID of a cell on which the second UE currently camps, or an ID of a base station of a cell on which the second UE currently camps.

The current relay service status of the second UE may include one of or a combination of the following: whether to currently provide a relay service for another remote-UE, a quantity of relay services currently provided for another remote-UE, a service type of a relay service currently provided for another remote-UE, or the like.

It may be understood that, the relay response message sent by the second UE 31 in a D2D broadcast manner may include a parameter for establishing a D2D connection between the first UE and the second UE, so that the first UE 20 establishes a D2D connection to the second UE 31, to transmit subsequent data that needs relay.

For example, the quality information of the channel between the second UE 31 and the base station 10 may be an L3 measurement result, or may be a channel quality indicator (Channel Quality Indicator, CQI). The current relay service status of the second UE 31 may include: whether to provide a relay service for another UE, a quantity of remote UEs to which a relay service is provided, a service type or priority of a relay service currently provided, or the like. The ID of the cell on which the second UE 31 currently camps may be an ECGI.

Optionally, the relay response message may further include a D2D resource pool. The D2D resource pool is a D2D resource pool that is allocated by the base station 10 to the second UE 31 in a broadcast manner or by using dedicated signaling, or the D2D resource pool is a D2D resource pool selected by the second UE 31. The D2D resource pool may be used by the first UE 20 for subsequent data transmission.

Optionally, a timer may be started at the same time when the second UE 31 sends the relay response message. It is assumed that duration that is set by the timer is T2. In this case, if no acknowledgment message corresponding to the relay response message is received within the time period T2 after 305, the second UE 31 may consider that the first UE 10 is not to use the second UE 31 as relay UE.

From the descriptions in 304 and 305, it can be known that, after the self assessment is performed, there may be multiple UEs that determine that they are capable of providing a relay service for the first UE 20. In this case, accordingly, the first UE 20 may receive relay response messages sent by multiple UEs. In this case, 306 may be performed.

306: The first UE 20 selects relay UE.

After the first UE 20 receives multiple relay response messages that are separately sent by multiple UEs, the first UE 20 selects one UE from the multiple UEs, and uses the selected one UE as the relay UE. In this embodiment of the present invention, the multiple UEs may be referred to as candidate relay UEs.

Optionally, the first UE 20 may select one UE from multiple UEs based on a predetermined criterion according to the relay response message.

Herein, the predetermined criterion may include: a feedback of the relay response message is the fastest and/or a delay of the relay response message is the smallest. The message may carry information such as a timestamp, to implement calculation of the delay.

Alternatively, the predetermined criterion may include at least one of the following: D2D channel quality between the one UE and the first UE 20 is the optimal, channel quality between the one UE and a Uu interface of the base station 10 is the optimal, or a quantity of relay services that are currently provided by the one UE is the smallest.

It should be understood that, alternatively, the first UE 20 may select the relay UE according to another piece of information. For example, the first UE 20 may perform the selection according to at least one of the following information: a type of a service that can be provided, a current relay service status (whether another remote-UE is served, a quantity of remote-UEs that are currently served, a type or priority of a service that is currently provided, and so on), an ID of a cell on which the one UE camps, an ID of a base station to which the one UE is connected, or the like.

For example, the first UE 20 may use UE, which is unable to perform direct communication with the base station 10, as the relay UE. If there is no UE that is unable to perform direct communication with the base station 10, the first UE 20 may use UE, which performs communication with the base station 10 via another base station, as the relay UE. When subsequently detecting that there is UE that is unable to perform direct communication with the base station 10, the first UE 20 may change the relay UE to the UE that is unable to perform direct communication with the base station 10.

For example, if the D2D channel quality between the second UE 31 and the first UE 20 is the optimal, cellular channel quality between the second UE 31 and the base station 10 is the optimal, and an ID of a base station connected to the second UE 31 is the same as the destination address of the data of the first UE 20 that needs relay, the first UE 20 may use the second UE 31 as the relay UE.

Optionally, if the relay request message in 303 includes an ID of preferentially selected relay UE, and in 304, the first UE 20 receives a relay response message that is sent by UE corresponding to the ID, the first UE 20 may directly use the UE as the relay UE in 306.

In this embodiment of the present invention, it is assumed that the first UE 20 selects the second UE 31 in 306. In this case, 306 may be understood as that the first UE 20 uses the second UE 31 in the at least one UE as the relay UE.

307: The first UE 20 sends an acknowledgment message to the second UE 31.

Optionally, the first UE 20 may send the acknowledgment message by using the D2D link between the first UE 20 and the second UE 31. Optionally, the acknowledgment message may be an ACK message of an automatic repeat request (Automatic Repeat Request, ARQ) function at a radio link control (Radio Link Control, RLC) layer.

In this way, after receiving the acknowledgment message, the second UE 31 can know that the first UE 20 uses the second UE 31 as the relay UE. Alternatively, optionally, if a timer T2 is started at the same time when the second UE 31 sends the relay response message in 305, it may be considered that the first UE 10 uses the second UE 31 as the relay UE if the second UE 31 receives the acknowledgment message within the time period T2 after 305.

Optionally, the first UE 20 may send the acknowledgment message in a D2D broadcast manner, but a destination address carried in the acknowledgment message is the second UE 31. In this case, another UE may know that the first UE 20 has selected the second UE 31 as the relay UE. In this way, another UE that does not respond to the relay request message in 303 in time does not need to perform self assessment or does not need to respond, so that a D2D transmission resource can be saved. In addition, another UE that has sent a relay response message but has not received an acknowledgment may stop the timer, so as to provide a relay service for another remote UE.

Optionally, in another case, if in 305, the first UE 20 receives a relay response message from only one UE (for example, the second UE 31) within a timer T1, in 306, the first UE 20 may directly determine the one UE (for example, the second UE 31) as the relay UE.

308: The second UE 31 performs relay preparation.

Alternatively, it may be understood that, after receiving the acknowledgment message, the second UE 31 prepares to undertake relay work.

For example, if the second UE 31 is in a connected state and a connection between the second UE 31 and the base station 10 is perfectly normal, the second UE 31 only needs to wait for the first UE 20 to send data that needs relay.

For example, if the second UE 31 is in an idle state, a random access (Random Access Channel, RACH) process needs to be executed, so as to establish an RRC connection.

For example, if the second UE 31 is in the connected state but currently out-of-synchronization in the uplink, the RACH process needs to be executed, to keep the uplink synchronized.

For example, if the second UE 31 is in the connected state and the connection between the second UE 31 and the base station 10 is perfectly normal, but there is no uplink transmission resource, the second UE 31 needs to request the uplink transmission resource from the base station 10. For example, the second UE 31 may send a scheduling request (Scheduling Request, SR) to the base station 10, to request the uplink transmission resource.

Specifically, by using a cellular link, the second UE 31 may send a relay sending resource request message to the base station 10, and receive relay sending resource scheduling information sent by the base station 10. The relay sending resource request message may include at least one of the following: identity information of data of the first UE 20 that needs relay, a magnitude of a data amount of data of the first UE 20 that needs relay, a source address and/or a destination address of data of the first UE 20 that needs relay, a quality of service (Quality of Service, QoS) class of data of the first UE 20 that needs relay, or signal quality information of the first UE 20. The relay sending resource scheduling information includes information about an uplink transmission resource needed by the second UE 31.

The signal quality information of the first UE 20 may include at least one of the following: reference signal received power (Reference Signal Received Power, RSRP), reference signal received quality (Reference Signal Received Quality, RSRQ), a received signal strength indication (Received Signal Strength Indication, RSSI), or the like.

For QoS classes, refer to a table of QoS class identifiers (QoS Class Identifier, QCI) shown in the following Table 1.

**Table 1**

| **QCI** | **Resource type** | **Priority** | **Packet delay budget** | **Packet error rate** | Example of services |
|---|---|---|---|---|---|
| 1 | | 2 | 100 ms | 10⁻² | Session voice |
| 2 | GBR | 4 | 150 ms | 10⁻³ | Session video (live streaming media) |
| 3 | | 3 | 50 ms | 10⁻³ | Live game |
| 4 | | 5 | 300 ms | 10⁻⁶ | Non-session video (buffered streaming media) |
| 5 | | 1 | 100 ms | 10⁻⁶ | Signaling |
| 6 | | 6 | 300 ms | 10⁻⁶ | Buffered video, and TCP-based application (web page, mail, chat) |
| 7 | Non-GBR | 7 | 100 ms | 10⁻³ | Voice |
| 8 | | 8 | 300 ms | 10⁻⁶ | Buffered video, and TCP-based application (web page, mail, chat) |
| 9 | | 9 | | | Sharing |

For example, if the relay request message in 303 includes the buffer size of the data of the first UE 20 that needs relay, the second UE 31 may update information about a buffer status report (Buffer Status Reports, BSR).

Optionally, the second UE 31 may explicitly or implicitly send indication information (not shown in FIG. 3) to the base station 10. The indication information is used to indicate that the second UE 31 will act as the relay UE to transmit uplink data for the first UE 20. In addition, the indication information may further include information such as a value of a quantity of data that needs relay.

Then, in this case, the first UE 20 may perform data transmission with the base station 10 via the relay UE (the second UE 31). That is, 309 is performed.

309: The first UE 20 performs data transmission with the base station 10 via the second UE 31.

Specifically, for uplink data, 309 may include:
sending, by the first UE 20, the uplink data to the second UE 31 in a D2D communication manner, and forwarding, by the second UE 31, the uplink data to the base station 10.

It may be understood that, a destination address of the uplink data is the base station 10.

Specifically, the first UE 20 may send the uplink data to the second UE 31 by using the D2D link between the first UE 20 and the second UE 31.

Optionally, the first UE 20 may send the uplink data to the second UE 31 by using a pre-configured D2D resource pool. The pre-configured D2D resource pool may be the same as the D2D resource pool used to send the relay request message in 303.

Optionally, if the relay response message in 305 includes a D2D resource pool, the first UE 20 may send the uplink data to the second UE 31 by using the D2D resource pool.

Further, the second UE 31 may send the uplink data to the second UE 31 by using the cellular link between the second UE 31 and the base station 10.

Optionally, if the second UE 31 does not send the indication information to the base station 10 in 308, before or after the second UE 31 forwards the uplink data to the base station 10 in 309, or at the same time when the second UE 31 forwards the uplink data to the base station 10 in 309, the second UE 31 may explicitly or implicitly send the indication information to the base station 10. The indication information is used to indicate that the second UE 31 will act as the relay UE to transmit uplink data for the first UE 20.

Optionally, before the second UE 31 forwards the uplink data to the base station 10, the second UE 31 may send an ACK message to the first UE 20, to indicate that the second UE 31 receives the uplink data. After the second UE 31 forwards the uplink data to the base station 10, the base station 10 may send an ACK message to the second UE 31, to indicate that the base station 10 receives the uplink data. The ACK between the first UE and the second UE may be an ACK message of an automatic repeat request (Automatic Repeat Request, ARQ) function at a radio link control (Radio Link Control, RLC) layer. The ACK between the second UE and the base station may be an ACK of an ARQ at the RLC layer, or may be an ACK of an HARQ (Hybrid ARQ).

It may be understood that, if receiving does not succeed or retransmission is needed, the second UE 31 and/or the base station 10 may send a NACK message. Details are not described herein.

Alternatively, optionally, after the second UE 31 forwards the uplink data to the base station 10, the base station 10 may send an ACK message to the second UE 31, to indicate that the base station 10 receives the uplink data. Then, the second UE 31 sends an ACK message to the first UE 20, to indicate that the base station 10 has received the uplink data.

Specifically, for downlink data, 309 may include:
sending, by the base station 10, the downlink data to the second UE 31, and forwarding, by the second UE 31, the downlink data to the first UE 20 in a D2D communication manner.

It may be understood that, a destination address of the downlink data is the first UE 20.

Specifically, the base station 10 may send the downlink data to the second UE 31 by using a cellular link. The second UE 31 may send the downlink data to the first UE 20 by using the D2D resource pool.

It should be noted that, alternatively, uplink and downlink data may be transmitted at the same time in 309. Details are not described herein again.

In another case, it is assumed that the relay request message in 303 includes an ID of preferentially selected relay UE, and the ID of the preferentially selected relay UE is the ID of the second UE 31. Further, in 304, the second UE 31 determines that the second UE 31 is capable of providing a relay service for the first UE 31. In this case, the second UE 31 may perform 308 before, after, or at the same time when 305 is performed. That is, for the second UE 31, an execution sequence in this embodiment of the present invention may be: 304→305→308→309, or 304→308→305→309, or 304→305, 308→309.

In this way, in this embodiment of the present invention, first UE acts as remote UE, can trigger relay UE selection by sending a relay request message, and after selecting and determining relay UE, can perform data transmission with a base station by using the relay UE, so that data transmission efficiency can be increased.

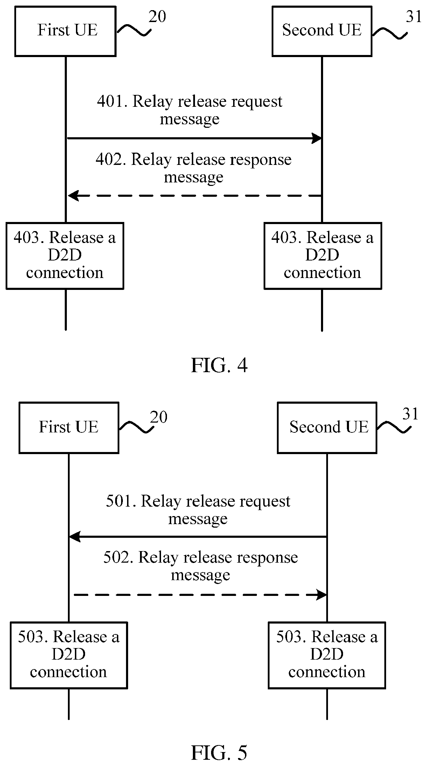

Further, after 309, a process of releasing a relay connection may be executed. Specifically, the releasing process may be shown in any one of the embodiments in FIG. 4 to FIG. 8.

FIG. 4 is an interaction flowchart of a method for releasing a relay connection according to an embodiment of the present invention. The method shown in FIG. 4 includes:
401: First UE 20 sends a relay release request message to second UE 31.
402: The second UE 31 sends a relay release response message to the first UE 20.
403: The first UE 20 releases a D2D connection to the second UE 31, and the second UE 31 releases the D2D connection to the first UE 20.
402 is optional. That is, the second UE 31 may not send the relay release response message.

FIG. 5 is an interaction flowchart of a method for releasing a relay connection according to another embodiment of the present invention. The method shown in FIG. 5 includes:
501: Second UE 31 sends a relay release request message to first UE 20.
502: The first UE 20 sends a relay release response message to the second UE 31.
503: The first UE 20 releases a D2D connection to the second UE 31, and the second UE 31 releases the D2D connection to the first UE 20.
502 is optional. That is, the first UE 20 may not send the relay release response message.

Further, after FIG. 4 or FIG. 5, if no other data (cellular data, or data transmitted for another remote UE with the assistance of the second UE 31) is transmitted between the second UE 31 and the base station 10, and no other data needs to be transmitted, the second UE 31 may also release a connection to the base station 10. The base station 10 may also release the connection to the second UE 31.

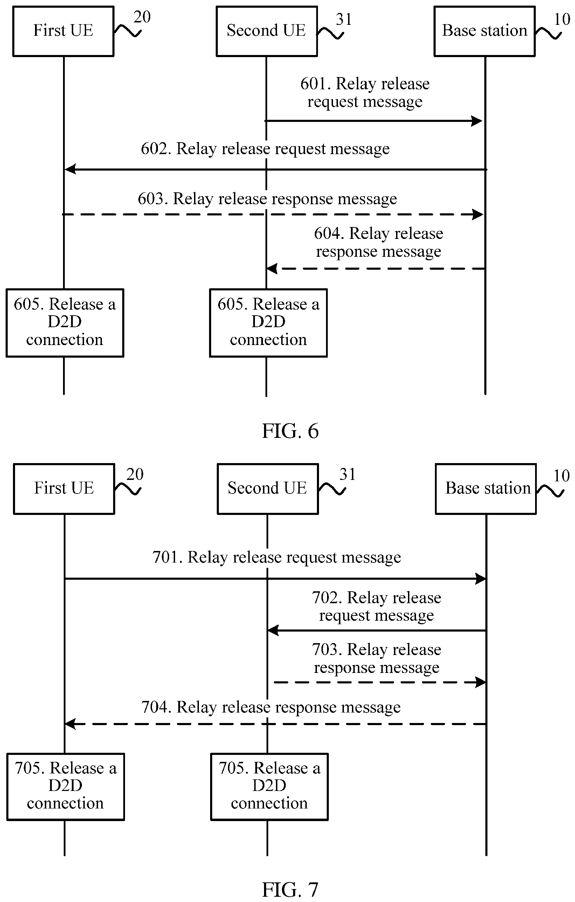

Optionally, if the first UE 20 is located within a coverage range of the base station 10, but an electricity quantity of the first UE 20 is excessively low, or if after 309, a location or an electricity quantity of the first UE 20 or signal quality between the first UE 20 and the base station 10 is changed, resulting in that signal transmission can be performed between the first UE 20 and the base station 10, after 309, the relay connection may be released by using the method shown in FIG. 6, FIG. 7, or FIG. 8.

FIG. 6 is an interaction flowchart of a method for releasing a relay connection according to another embodiment of the present invention. The method shown in FIG. 6 includes:
601: Second UE 31 sends a relay release request message to a base station 10.
602: The base station 10 forwards the relay release request message to first UE 20.
603: The first UE 20 sends a relay release response message to the base station 10.
604: The base station 10 sends the relay release response message to the second UE 31.
605: The first UE 20 releases a D2D connection to the second UE 31, and the second UE 31 releases the D2D connection to the first UE 20.
603 and 604 are optional. That is, the relay release response message may not be sent.

FIG. 7 is an interaction flowchart of a method for releasing a relay connection according to another embodiment of the present invention. The method shown in FIG. 7 includes:
701: First UE 20 sends a relay release request message to a base station 10.
702: The base station 10 forwards the relay release request message to second UE 31.
703: The second UE 31 sends a relay release response message to the base station 10.
704: The base station 10 sends the relay release response message to the first UE 20.
705: The first UE 20 releases a D2D connection to the second UE 31, and the second UE 31 releases the D2D connection to the first UE 20.
703 and 704 are optional. That is, the relay release response message may not be sent.

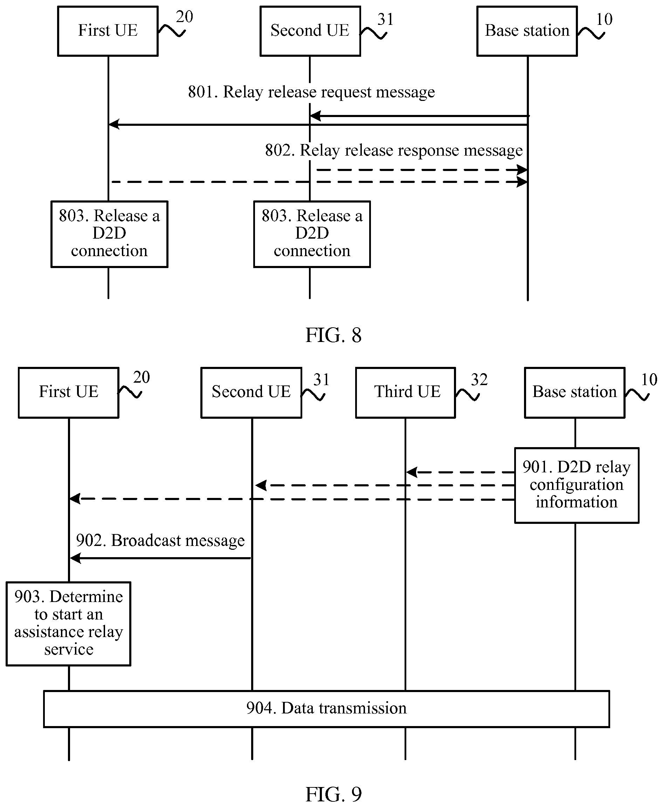

FIG. 8 is an interaction flowchart of a method for releasing a relay connection according to another embodiment of the present invention. The method shown in FIG. 8 includes:
801: A base station 10 sends a relay release request message to first UE 20 and second UE 31.
802: The first UE 20 and the second UE 31 each send a relay release response message to the base station 10.
803: The first UE 20 releases a D2D connection to the second UE 31, and the second UE 31 releases the D2D connection to the first UE 20.
802 is optional. That is, the relay release response message may not be sent.

Further, after FIG. 6, FIG. 7, or FIG. 8, if no other data (cellular data, or data transmitted for another remote UE with the assistance of the second UE 31) is transmitted between the second UE 31 and the base station 10, and no other data needs to be transmitted, the second UE 31 may also release a connection to the base station 10. The base station 10 may also release the connection to the second UE 31.

It should be noted that, other manners may be used for a relay releasing process, and are not listed one by one herein.

It can be seen that, after relay data transmission is completed, the D2D connection established for relay may be released. A specific releasing process may be triggered by the first UE 20 that acts as the remote UE, or may be triggered by the second UE 31 that acts as the relay UE, or may be triggered by the base station 31. This is not limited in the present invention.

FIG. 9 is an interaction flowchart of a data transmission method according to another embodiment of the present invention. FIG. 9 shows a base station 10, first UE 20, second UE 31, and third UE 32.

For descriptions about the base station 10, the first UE 20, the second UE 31, and the third UE 32, refer to the description in FIG. 3. To avoid repetition, details are not described herein again.

The method shown in FIG. 9 includes the following steps.

901: The base station 10 sends D2D relay configuration information.

Specifically, the base station 10 may send, at a specified time or periodically or as triggered by an event, the D2D relay configuration information in a broadcast manner or by using dedicated signaling. For example, the dedicated signaling may be radio resource control (Radio Resource Control, RRC) signaling. Relay configuration information triggered by an event may have a condition. For example, when UE camps on or accesses the base station, the base station configures relay information for the UE.

The D2D relay configuration information includes a parameter related to D2D UE relay configuration. For example, the parameter may include a parameter needed to start an assistance relay service.

In this embodiment of the present invention, the parameter related to the D2D UE relay configuration may include: a D2D relay transmission resource used by relay UE, a parameter related to a condition for starting D2D relay by remote UE, a parameter related to a D2D relay task borne by relay UE, or the like.

For example, the D2D relay configuration information may include a signal quality limit (which may be referred to as a first threshold herein) of cellular transmission, or may include a quantity of times of retransmission (which may be referred to as a second threshold herein) for which the remote UE sends a relay request message, or may include a limit (which may be referred to as a third threshold herein) of a remaining electricity quantity for performing relay by the relay UE, or may include a period (which may be referred to as a fourth threshold) of sending a broadcast message by the relay UE.

It may be understood that, the D2D relay configuration information may be received by all UEs located within the service range of the base station 10. It may be understood that, the first UE 20, the second UE 31, and the third UE 32 can all receive the D2D relay configuration information.

902: UE having a relay capability sends a broadcast message, where the broadcast message includes indication information used to indicate that the UE is capable of acting as relay UE.

Specifically, UE that has received the D2D relay configuration information performs self assessment, and determines whether the UE has the relay capability. If determining that the UE has the relay capability, the UE sends the broadcast message in a D2D broadcast manner.

The UE that has received the D2D relay configuration information may perform self assessment according to a respective network status and relay service status.

For example, the self assessment may include: whether the UE is in an idle (Idle) state or a connected (connected) state; whether an RRC connection has been established; if no RRC connection has been established, whether an RRC connection can be established; whether there is remaining power (which may be pre-configured, or greater than the predetermined threshold configured in the D2D relay configuration information in 901); or whether a remaining electricity quantity is greater than a threshold (which may be pre-configured, or may be (that is, the third threshold) included in the D2D relay configuration information in 901).

In this embodiment of the present invention, it is assumed that the second UE 31 has the relay capability. In this case, the second UE 31 sends a broadcast message in a D2D broadcast manner, and the broadcast message includes the indication information that the second UE is capable of acting as relay UE. Alternatively, it may be understood that, the broadcast message indicates that the second UE has the relay capability. In this way, all UEs that can perform D2D communication with the second UE 31 can receive the broadcast message.

In this embodiment of the present invention, it is assumed that the third UE 32 does not have the relay capability. Alternatively, it is assumed that a relay service currently borne by the third UE 32 already reaches an upper limit. In this case, the third UE 32 does not send a D2D broadcast message.

It may be understood that, 902 means that, the second UE 31 sends the broadcast message. The broadcast message includes the indication information that the second UE 31 is capable of acting as relay UE. Specifically, the second UE 31 may periodically send the broadcast message in a D2D broadcast manner. A period of the sending may be pre-configured or may be (that is, the fourth threshold) included in the D2D relay configuration information in 901.

The broadcast message sent by second UE 31 further includes at least one of the following: quality information of a channel between the second UE 31 and the base station 10, a current relay service status of the second UE 31, an identity ID of a cell on which the second UE 31 currently camps, or an ID of a base station of a cell on which the second UE 31 currently camps.

The base station in the cell on which the second UE 31 currently camps is the base station 10. For a description about the current relay service status of the second UE 31, refer to the related description in step 304 in the embodiment of FIG. 3. To avoid repetition, details are not described herein again.

The broadcast message further includes at least one of the following: the second UE is located within a coverage range of the base station; the second UE has established an RRC connection to the base station; signal quality of the RRC connection established by the second UE to the base station is higher than a preset signal quality threshold; a a remaining battery electricity quantity of the second UE is greater than a preset electricity quantity threshold; transmit power of the second UE is less than a preset transmit power threshold; or the second UE receives, from the base station, information instructing the second UE to send a broadcast message.

Optionally, the broadcast message may further include a D2D resource pool. The D2D resource pool may be a D2D resource pool that is allocated by the base station 10 to the second UE 31 in a broadcast manner or by using dedicated signaling, or the D2D resource pool may be a D2D resource pool selected by the second UE 31.

It may be understood that, there may be one or more UEs having the relay capability. In this case, accordingly, in 902, one or more UEs send broadcast messages.

903: The first UE 20 determines to start an assistance relay service.

Specifically, when the first UE 20 is unable to directly perform data transmission with the base station 10, the first UE 20 determines to start the assistance relay service.
(1) The first UE 20 is not located within the coverage range of the base station 10.
   This case may be a location change of the first UE 20. That is, the first UE 20 moves from the inside of an in-coverage range of the base station 10 to the outside of the in-coverage range.
(2) The first UE 20 detects that signal quality between the first UE 20 and the base station 10 is lower than the preset signal quality threshold.
   Optionally, the signal quality threshold herein may be the signal quality limit (that is, the first threshold) included in the D2D relay configuration information in 901.
   It may be understood that, usually when the first UE 20 detects that the signal quality between the first UE 20 and the base station 10 is excessively poor, the first UE 20 attempts to search for a new cell whose signal quality is better, and performs cell switching. Therefore, optionally, that herein the first UE 20 detects that signal quality between the first UE 20 and the base station 10 is lower than the preset signal quality threshold may refer to that the first UE 20 detects that the signal quality between the first UE 20 and the base station 10 is lower than the preset signal quality threshold and the first UE 20 does not find a cell that satisfies a switching condition.
(3) An electricity quantity of the first UE 20 is less than a preset electricity quantity threshold.
(4) The first UE 20 is unable to normally camp on a cell or is unable to normally access a cell, or the first UE 20 is unable to normally establish an RRC connection to the base station 10.

For example, access to a cell is forbidden or a service of a cell is restricted, and consequently the first UE 20 is unable to normally establish an RRC connection.

This case may be caused due to cell barred, cell unavailable, or other reasons.

For another example, a radio link failure (Radio Link Failure, RLF) occurs in the first UE 20, RRC reestablishment cannot be completed, and a cell cannot be reselected. Consequently, the first UE 20 is unable to normally establish an RRC connection.

It may be understood that, in another case in which the first UE 20 is unable to directly perform data transmission with the base station 10, the first UE 20 may determine to start the assistance relay service.

In this case, the first UE 20 has received, from the second UE 31, the broadcast message, to indicate that the second UE 31 is capable of acting as relay UE. In this case, the first UE 20 performs data transmission with the base station 10 via the second UE 31 as the relay UE.

Alternatively, optionally, if the first UE 20 has received broadcast messages that are sent by multiple UEs having the relay capability, the first UE 20 may first select one UE as the relay UE randomly or based on a predetermined rule. Herein, it is assumed that the selected relay UE is the second UE 31. Specifically, herein, for a method for selecting the relay UE based on the predetermined rule, refer to 306 in the embodiment of FIG. 3. To avoid repetition, details are not described herein again.

That is, after 903, 904 may be performed.

904: The first UE 20 performs data transmission with the base station 10 via the second UE 31.

Specifically, for uplink data, 904 may include:
sending, by the first UE 20, the uplink data to the second UE 31 in a D2D communication manner, and forwarding, by the second UE 31, the uplink data to the base station 10.

It may be understood that, a destination address of the uplink data is the base station 10.

Specifically, the first UE 20 may send the uplink data to the second UE 31 by using the D2D link between the first UE 20 and the second UE 31.

Optionally, the first UE 20 may send the uplink data to the second UE 31 by using a pre-configured D2D resource pool.

Optionally, if the broadcast message in 902 includes a D2D resource pool, the first UE 20 may send the uplink data to the second UE 31 by using the D2D resource pool.

Further, the second UE 31 may send the uplink data to the second UE 31 by using the cellular link between the second UE 31 and the base station 10.

Optionally, before or after the second UE 31 forwards the uplink data to the base station 10 in 904, or at the same time when the second UE 31 forwards the uplink data to the base station 10 in 904, the second UE 31 may explicitly or implicitly send the indication information to the base station 10. The indication information is used to indicate that the second UE 31 will act as the relay UE to transmit uplink data for the first UE 20.

Optionally, before the second UE 31 forwards the uplink data to the base station 10, the second UE 31 may send an ACK message to the first UE 20, to indicate that the second UE 31 receives the uplink data. After the second UE 31 forwards the uplink data to the base station 10, the base station 10 may send an ACK message to the second UE 31, to indicate that the base station 10 receives the uplink data.

Alternatively, optionally, after the second UE 31 forwards the uplink data to the base station 10, the base station 10 may send an ACK message to the second UE 31, to indicate that the base station 10 receives the uplink data. Then, the second UE 31 sends an ACK message to the first UE 20, to indicate that the base station 10 has received the uplink data.

Specifically, for downlink data, 904 may include:
sending, by the base station 10, the downlink data to the second UE 31, and forwarding, by the second UE 31, the downlink data to the first UE 20 in a D2D communication manner.

It may be understood that, a destination address of the downlink data is the first UE 20.

Specifically, the base station 10 may send the downlink data to the second UE 31 by using a cellular link. The second UE 31 may send the downlink data to the second UE 31 by using the D2D resource pool.

It should be noted that, alternatively, uplink and downlink data may be transmitted at the same time in 904. Details are not described herein.

In addition, it should be noted, in the embodiment shown in FIG. 9, 902 may be performed after 903. That is, an execution sequence of the method may be 903→902→904.

That is, in this embodiment, after 903, the first UE 20 waits to receive the broadcast message that is in 902.

In this way, in the embodiment shown in FIG. 9, UE (such as second UE 31) that can provide a relay service sends a broadcast message, where the broadcast message includes indication information that the UE is capable of acting as relay UE. Therefore, first UE that is capable of acting as remote UE can perform data transmission with a base station by using the relay UE, so that data transmission efficiency can be increased.

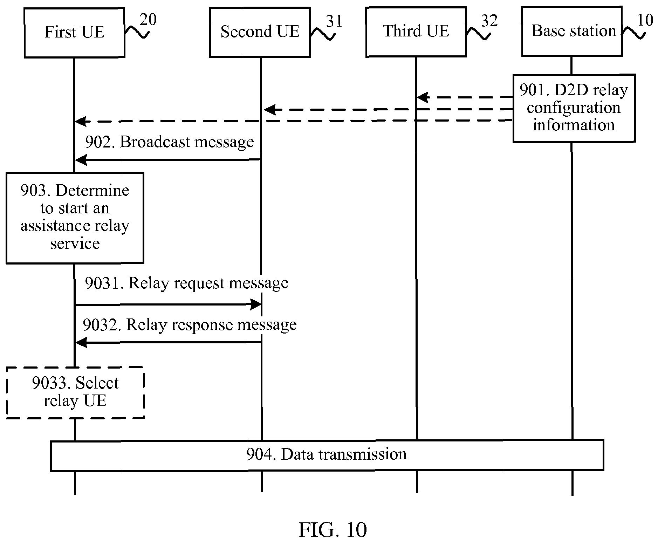

In another scenario, as shown in FIG. 10, after 903 and before 904, the method may further include:
9031: The first UE 20 sends a relay request message.

The first UE 20 may send the relay request message to a sender of the broadcast message in 902.

Optionally, the first UE 20 may send the relay request message in a D2D broadcast manner.

For example, if in 902, the first UE 20 receives the broadcast message sent by the second UE 31, in 9031, the first UE 20 sends the relay request message to the second UE 31.

For example, if in 902, the first UE 20 receives the broadcast message sent by the second UE 31, and receives a broadcast message sent by another fourth UE, in 9031, the first UE 20 sends the relay request message to the second UE 31 and the fourth UE.

In this embodiment of the present invention, the relay request message includes a source address and a destination address of data that needs assistance relay and that is of the first UE 20. For example, the source address may be an ID of the first UE 20. The destination address may be an ID of the base station 10 or an ID (cell ID) of a cell of the base station 10. For example, the ID of the cell may be an ECGI.

Optionally, the relay request message may further include at least one of the following: indication information of data that needs assistance relay, a magnitude of a data amount of data that needs assistance relay, a buffer size of data that needs assistance relay, a service type of data that needs assistance relay, an ID of relay UE to be preferentially selected, an ID of a cell on which the first UE 20 last camps, an ID of a base station of a cell on which the first UE 20 last camps, or a target ID of group communication.

If a cell on which the first UE 20 currently camps can be determined, the cell on which the first UE 20 last camps is the cell on which the first UE 20 currently camps. If the first UE 20 currently camps on no cell, the cell on which the first UE 20 last camps is a cell on which the first UE 20 last camps before a current moment.

The target ID of the group communication is a group ID (Group ID).

In addition, the relay request message may further include a data direction of the data that needs assistance relay, and the data direction may be uplink and/or downlink.

In addition, the relay request message may further include a service type that needs assistance relay. For example, the service type may be directly performing communication with the base station 10 or indirectly performing communication with the base station 10 via another base station.

Optionally, a timer may be started at the same time when the first UE 20 sends the relay request message. It is assumed that duration that is set by the timer is T1. In this case, if no relay response message corresponding to the relay request message is received during the time period T1 after 9031, the first UE 20 may retransmit the relay request message. The quantity of times of retransmission herein may be preset, or may be (that is, the second threshold) included in the D2D relay configuration information in 901. Herein, T1 may be zero.

It may be understood that, if after a quantity of times of sending a relay request message reaches the quantity of times of retransmission, the first UE 20 still receives no relay response message corresponding to the relay request message, it indicates that the UE that sends the broadcast message in 902 is already not located within a D2D communication range of the first UE 20, or it indicates that the UE that sends the broadcast message in 902 already is unable to continue to provide the relay service. In this case, the first UE 20 may continue to listen to the broadcast message, that is, perform 902 again. Alternatively, the first UE 20 may send the relay request message again after duration T3.

9032: The first UE 20 receives a relay response message.

In this embodiment of the present invention, it is assumed that the first UE 20 receives the relay response message sent by the second UE 31.

Optionally, after receiving the relay request message, the second UE 31 may perform self assessment again, and send the relay response message when determining that the second UE 31 is capable of providing a relay service for the first UE 20. Herein, for a description about the self assessment, refer to the description of 304 in the embodiment in FIG. 3. To avoid repetition, details are not described herein again.

Optionally, before or after 9032, or at the same time when 9032 is performed, the second UE 31 performs relay preparation work. Specifically, for a description about the relay preparation, refer to the description of 308 in the embodiment in FIG. 3. To avoid repetition, details are not described herein again. Specifically, if the relay preparation is performed after 9032, refer to the descriptions of 306 to 308 in the embodiment in FIG. 3. To avoid repetition, details are not described herein again.

Further, after 9032, 904 may continue to be performed.

Alternatively, if in 9032, the first UE 20 receives relay response messages sent by multiple UEs, 9033 may be performed after 9032.

9033: The first UE 20 selects the relay UE from multiple UEs (senders of relay response messages).

Specifically, for step 9033, refer to the description of 306 in the embodiment of FIG. 3. In this embodiment of the present invention, it is assumed that the relay UE selected by the first UE 20 is the second UE 31.

Further, after 9033, 904 may continue to be performed.

It may be understood that, after the embodiment shown in FIG. 9 or FIG. 10, that is, after the data transmission in 904 succeeds, the process of releasing the relay connection may continue to be executed. Specifically, for the releasing process, refer to the description in any one of the embodiments in FIG. 4 to FIG. 8. To avoid repetition, details are not described herein again.

In this way, in the embodiment shown in FIG. 10, UE (such as second UE 31) that can provide a relay service sends a broadcast message, so that first UE that acts as remote UE can trigger relay UE selection by sending a relay request message, and after selecting and determining relay UE, can perform data transmission with a base station by using the relay UE, so that data transmission efficiency can be increased.

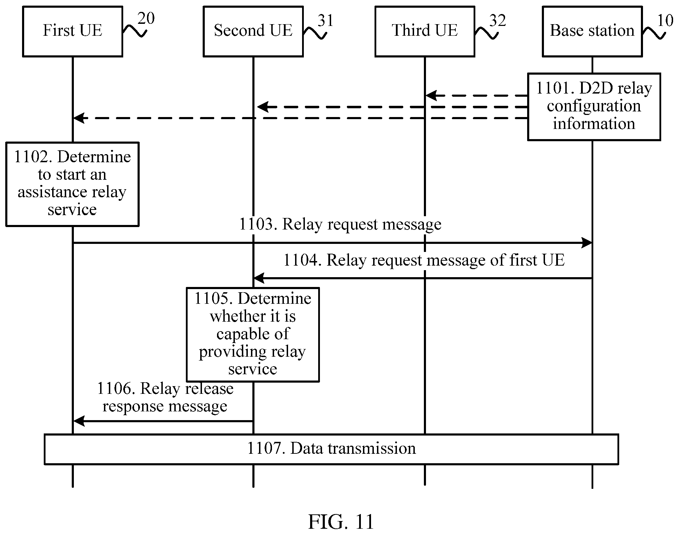

FIG. 11 is an interaction flowchart of a data transmission method according to another embodiment of the present invention. FIG. 11 shows a base station 10, first UE 20, second UE 31, and third UE 32.

For descriptions about the base station 10, the first UE 20, the second UE 31, and the third UE 32, refer to the description in FIG. 3. To avoid repetition, details are not described herein again.

The method shown in FIG. 11 includes the following steps.

1101: The base station 10 sends D2D relay configuration information.

Specifically, for 1101 in FIG. 11, refer to the description of 301 in the embodiment in FIG. 3. To avoid repetition, details are not described herein again.

1102: The first UE 20 determines to start an assistance relay service.

The first UE 20 may determine, in the following case, to start the assistance relay service: link quality of the first UE 20 decreases but no other available cell is found, or an electricity quantity of the first UE 20 is insufficient.

For example, the first UE 20 detects that information about the channel quality between the first UE 20 and the base station 10 is increasingly weak. For example, when the channel quality information is less than a limit 1 and greater than a limit 2, the first UE 20 determines to start the assistance relay service.

For example, the first UE 20 can perform data packet transmission with the base station 10 only when the channel quality information of the first UE 20 is greater than the limit 1. When the channel quality information of the first UE 20 is less than the limit 2, the first UE 20 is unable to perform any communication with the base station 10. When the channel quality information of the first UE 20 is less than the limit 1 and greater than the limit 2, a success rate of the data packet transmission between the first UE 20 and the base station 10 is nearly zero, but transmission of a simple signal (such as a reference signal) between the first UE 20 and the base station 10 may succeed.

For example, when the first UE 20 detects that the electricity quantity is insufficient, for example, the electricity quantity is less than a limit 3 and greater than a limit 4, the first UE 20 determines to start the assistance relay service.

For example, if the first UE 20 intends to send a data packet to the base station 10, an electricity quantity that is needed is at least the limit 3. In addition, even the electricity quantity needed by the transmission of the simple signal (such as the reference signal) between the first UE 20 and the base station 10 is at least the limit 4.

Herein, the limit 1 is greater than the limit 2, and the limit 3 is greater than the limit 4. The limit 1, the limit 2, the limit 3, and the limit 4 may be pre-configured, or may be included in the D2D relay configuration information in 1101. This is not limited in the present invention.

1103: The first UE 20 sends a relay request message to the base station 10.

It may be understood that, the first UE 20 sends the relay request message to the base station 10 by using a cellular link. A form of the relay request message may be any one of the following: application layer signaling, non access stratum (Non Access Stratum, NAS) signaling, RRC signaling, a control element (Control Element, CE) at a medium access control (Medium Access Control, MAC) layer, or physical (PHY) layer signaling.

It may be understood that, in this embodiment, the base station 10 is a serving base station of the first UE 20.

Optionally, the relay request message may include at least one of the following: a request reason, an ID of a service requested to be preferentially guaranteed, or location information and buffer status information of the first UE.

The ID of the service requested to be preferentially guaranteed may be a logical channel identity (Logical Channel ID, LCID), or may be a radio bearer identity (Radio Bearer ID, RBID).

Optionally, a timer may be started at the same time when the first UE 20 sends the relay request message. It is assumed that duration that is set by the timer is T1.

If a relay response message corresponding to the relay request message is received within the time period T1 after 1103, the first UE 20 stops the timer.

If the first UE 20 receives, within the time period T1 after 1103, no relay response message corresponding to the relay request message, there may be no available relay UE around the first UE 20, or the base station 10 may not receive the relay request message. In this case, the first UE 20 may give up the relay request, or the first UE 20 may resend the relay request message. The quantity of times of retransmission herein may be preset, or may be included in the D2D relay configuration information in 1101. Herein, T1 may be zero.

It should be noted that, a condition at which the first UE 20 sends the relay request in 1103 may be described in 1102.

1104: The base station 10 forwards the relay request message of the first UE 20.

Optionally, the base station 10 may send the relay request message of the first UE 20 to one specific UE by using the cellular link, for example, send the relay request message to the second UE 31.

Specifically, the base station 10 may first determine multiple UEs that are near the first UE 20 and that are located within a range of a cell of the base station 10, then select the second UE 31 from the multiple UEs, and specify the second UE 31 as the relay UE for the first UE 20.

The base station 10 may perform the specifying according to signal quality information and/or location information, or the like.

For example, if the base station 10 determines that in the multiple UEs, signal quality between the second UE 31 and the base station 10 is the strongest, or a distance between the second UE 31 and the first UE 20 is the shortest, the base station 10 may specify the second UE 31 as the relay UE for the first UE 20.

It may be understood that, in 1104, the relay request message forwarded by the base station 10 to the second UE 31 may include: indication information that the second UE 31 acts as the relay UE for the first UE 20.

It should be noted that, in this embodiment of the present invention, after the base station 10 receives the relay request message from the first UE 20 in 1103, the base station 10 needs to perform an operation such as decapsulation, and then forward the relay request message to the second UE 31.

The relay request message that is encapsulated again may further include a D2D resource pool.

1105: UE that receives the relay request message of the first UE 20 that is sent by the base station 10 determines whether the UE is capable of providing a relay service.

It may be understood that, the second UE 31 performs self assessment, to determine whether it is capable of providing a relay service for the first UE 20.

For a description about the self assessment, refer to the self-assessment-related description in 304 in the embodiment in FIG. 3. To avoid repetition, details are not described herein again.

In addition, in this embodiment of the present invention, the second UE 31 may determine, according to location information of the first UE 20, a relative distance to the first UE 20, and perform self assessment according to the relative distance.

For example, the second UE 31 may perform self assessment according to information such as a current relay service status or a current remaining electricity quantity. The information is not listed one by one herein.

If the second UE 31 determines, by means of the self assessment, that the second UE 31 is capable of providing a relay service for the first UE 20, 1106 is performed. Otherwise, the second UE 31 may send no message.

1106: The second UE 31 sends a relay response message to the first UE 20.

Specifically, for 1106 in the embodiment of FIG. 11, refer to the description of 305 in the embodiment in FIG. 3. To avoid repetition, details are not described herein again.

Optionally, the relay response message may include a D2D resource pool.

It may be understood that, before or after or at the same time when 1106 is performed, the second UE 31 may execute a process of relay preparation. For details, refer to the description of 308 in the embodiment of FIG. 3.

1107: The first UE 20 performs data transmission with the base station 10 via the second UE 31.

Specifically, for performing of 1107, refer to 309 shown in FIG. 3, or refer to 904 shown in FIG. 9. To avoid repetition, details are not described herein again.

That is, the data transmitted in 1107 may be uplink data or downlink data, or uplink and downlink data.

In this way, in the embodiment shown in FIG. 11, after receiving a relay request message of first UE, a base station can specify second UE as relay UE, and then the first UE can perform data transmission with the base station via the second UE, so that data transmission efficiency can be increased.

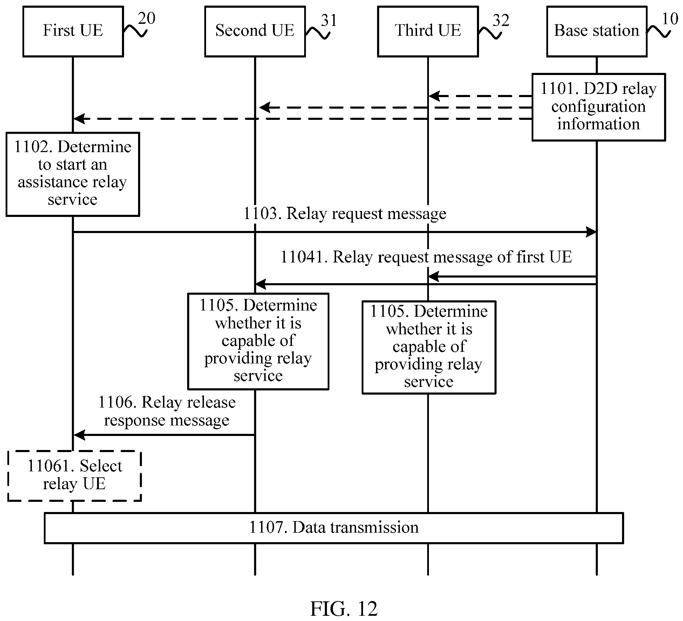

In another embodiment, as shown in FIG. 12, after 1103, the base station may perform 11041.

11041: The base station 10 forwards the relay request message of the first UE 20.

Optionally, the base station 10 may send, in a broadcast manner, the relay request message of the first UE 20 to all UEs located within the service range of the base station 10.

Alternatively, optionally, the base station 10 sends the relay request message of the first UE 20 to multiple UEs near the first UE 20 according to the location information that is of the first UE 20 and that is included in the relay request message.

The relay request message of the first UE 20 may include the ID of the first UE 20. The ID of the first UE 20 may be a cell radio network temporary identifier (Cell Radio Network Temporary Identifier, C-RNTI).

In this embodiment of the present invention, it is assumed that the base station 10 sends the relay request message of the first UE 20 to the second UE 31 and the third UE 32.

1105: UE that receives the relay request message of the first UE 20 that is sent by the base station 10 determines whether the UE is capable of providing a relay service.

Herein, the second UE 31 and the third UE 32 determine whether they are capable of providing a relay service.

1106: The UE that determines, in 1105, that the UE is capable of providing a relay service sends a relay response message.

It may be understood that, if the first UE 20 receives, in 1106, a relay response message sent by only one UE (the second UE 31), the first UE 20 performs data transmission with the base station 10 by using the one UE (the second UE 31). That is, the first UE 20 performs 1107 after 1106.

Alternatively, it may be understood that, if the first UE 20 receives, in 1106, relay response messages sent by multiple UEs, the first UE 20 performs 11061 after 1106.

11061: The first UE 20 selects relay UE from multiple UEs.

In this embodiment of the present invention, it is assumed that the first UE 20 selects the second UE 31 as the relay UE. In this case, the first UE 20 performs 1107 after 11061.

For 11061, refer to the similar description of 306 in the embodiment in FIG. 3. To avoid repetition, details are not described herein again.

It may be understood that, after the embodiment shown in FIG. 11 or FIG. 12, that is, after the data transmission 1107 succeeds, the process of releasing the relay connection may continue to be executed. Specifically, for the releasing process, refer to the description in any one of the embodiments in FIG. 4 to FIG. 8. To avoid repetition, details are not described herein again.

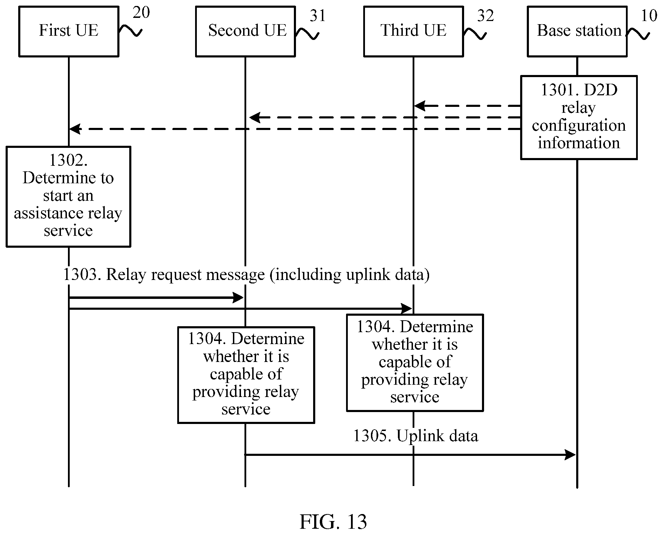

FIG. 13 is an interaction flowchart of a data transmission method according to another embodiment of the present invention. FIG. 13 shows a base station 10, first UE 20, second UE 31, and third UE 32.

For descriptions about the base station 10, the first UE 20, the second UE 31, and the third UE 32, refer to the description in FIG. 3. To avoid repetition, details are not described herein again.

The method shown in FIG. 13 includes the following steps.

1301: The base station 10 sends D2D relay configuration information.

Specifically, for 1301 in FIG. 13, refer to 301 in the embodiment in FIG. 3. To avoid repetition, details are not described herein again.

1302: The first UE 20 determines to start an assistance relay service.

Specifically, when the first UE 20 is unable to directly send uplink data to the base station 10, the first UE 20 determines to start the assistance relay service.

For example, the assistance relay service may be started in any one of the following cases:
(1). The first UE 20 is not located within a coverage range of the base station 10, and consequently is unable to directly send uplink data to the base station 10.
   This case may be a location change of the first UE 20, that is, the first UE 20 moves from the inside of an in-coverage range of the base station 10 to the outside of the in-coverage range.
(2). The first UE 20 detects that signal quality between the first UE 20 and the base station 10 is less than a preset signal quality threshold, and consequently the first UE 20 is unable to directly send uplink data to the base station 10.
   It may be understood that, usually when the first UE 20 detects that the signal quality between the first UE 20 and the base station 10 is excessively poor, the first UE 20 attempts to search for a new cell whose signal quality is better, and performs cell switching. Therefore, optionally, that herein the first UE 20 detects that signal quality between the first UE 20 and the base station 10 is less than a preset signal quality threshold may refer to that the first UE 20 detects that the signal quality between the first UE 20 and the base station 10 is lower than the preset signal quality threshold and the first UE 20 does not find a cell that satisfies a switching condition.
(3). An electricity quantity of the first UE 20 is less than a preset electricity quantity threshold, and consequently is insufficient for sending uplink data to the base station 10.
(4). The first UE 20 is unable to normally camp on a cell, or the first UE 20 is unable to normally establish an RRC connection to the base station 10, and consequently is unable to directly send uplink data to the base station 10.

For example, access to a cell is forbidden or a service of a cell is restricted, and consequently the first UE 20 is unable to normally establish an RRC connection.

This case may be caused due to cell barred, cell unavailable, or other reasons.

For another example, a radio link failure (Radio Link Failure, RLF) occurs in the first UE 20, RRC reestablishment cannot be completed, and a cell cannot be reselected. Consequently, the first UE 20 is unable to normally establish an RRC connection.

It may be understood that, in another case in which uplink data cannot be directly sent to the base station 10, the first UE 20 may determine to start the assistance relay service.

1303: The first UE 20 sends a relay request message, where the relay request message includes uplink data.

Specifically, the first UE 20 sends the relay request message (relay request message) in a D2D broadcast manner. In this way, all UEs that can perform D2D communication with the first UE 20 can receive the relay request message.

Optionally, the first UE 20 may determine transmit power of the relay request message according to reference signal received power (Reference Signal Received Power, RSRP). Alternatively, the first UE 20 may send the relay request message at maximum transmit power. The maximum transmit power herein is determined in a D2D sending resource pool.

Optionally, the first UE 20 may send the relay request message by using a pre-configured D2D sending resource pool.

In this embodiment of the present invention, the relay request message includes a source address and a destination address of data that needs assistance relay and that is of the first UE 20. For example, the source address may be an ID of the first UE 20. The destination address may be an ID of the base station 10 or an ID (cell ID) of a cell of the base station 10. For example, the ID of the cell may be an ECGI.

Optionally, the relay request message may further include at least one of the following: indication information of data (that is, uplink data) that needs assistance relay, a magnitude of a data amount of data that needs assistance relay, a service type of data that needs assistance relay, an ID of relay UE to be preferentially selected, an ID of a cell on which the first UE 20 last camps, an ID of a base station of a cell on which the first UE 20 last camps, or a target ID of group communication.

If a cell on which the first UE 20 currently camps can be determined, the cell on which the first UE 20 last camps is the cell on which the first UE 20 currently camps. If the first UE 20 currently camps on no cell, the cell on which the first UE 20 last camps is a cell on which the first UE 20 last camps before a current moment.

The target ID of the group communication is a group ID (Group ID).

In addition, the relay request message may further include a service type that needs assistance relay. For example, the service type may be directly performing communication with the base station 10 or indirectly performing communication with the base station 10 via another base station.

1304: UE that receives the relay request message sent by the first UE 20 determines whether the UE is capable of providing a relay service.

It may be also understood as that the UE that receives the relay request message sent by the first UE 20 performs self assessment.

For a description about the self assessment, refer to the description of 304 in the embodiment in FIG. 3. To avoid repetition, details are not described herein again.

After the self assessment is performed, if the UE that receives the relay request message sent by the first UE 20 determines that the UE is capable of providing a relay service for the first UE 20, the UE may forward the uplink data in the relay request message to the base station 10. It may be understood that, there may be one or more UEs that determine that they are capable of providing a relay service for the first UE 20.

In this embodiment of the present invention, it is assumed that the second UE 31 determines that it is capable of providing a relay service for the first UE 20. In this case, 1305 is performed.

1305: The second UE 31 forwards the uplink data to the base station 10.

Specifically, the second UE 31 sends the uplink data to the second UE 31 by using the cellular link between the second UE 31 and the base station 10.

Optionally, before or after 1305, or at the same time when 1305 is performed, the second UE 31 may explicitly or implicitly send the indication information to the base station 10. The indication information is used to indicate that the second UE 31 will act as the relay UE to transmit uplink data for the first UE 20.

It may be understood that, if in 1304, it is determined that there may be multiple UEs that are capable of providing a relay service for the first UE 20, in 1305, multiple relay UEs may send the uplink data to the base station 10.

For example, it is assumed that, in 1304, the third UE 32 determines, by means of the self assessment, that it is capable of providing a relay service for the first UE 20. In this case, after 1304, the method may further include: sending, by the third UE 32, the uplink data to the base station 10.

It should be noted that, if an amount of the data that needs assistance relay and that is of the first UE 20 is relatively small, or a single-time sending service of the first UE 20 needs assistance relay, the uplink data may be transmitted by using the method shown in the embodiment of FIG. 13.

In this way, in this embodiment of the present invention, the first UE acting as remote UE sends the uplink data at the same time when sending the relay request message, so that interactions between the remote UE and the relay UE can be reduced, and then a D2D transmission resource can be saved.

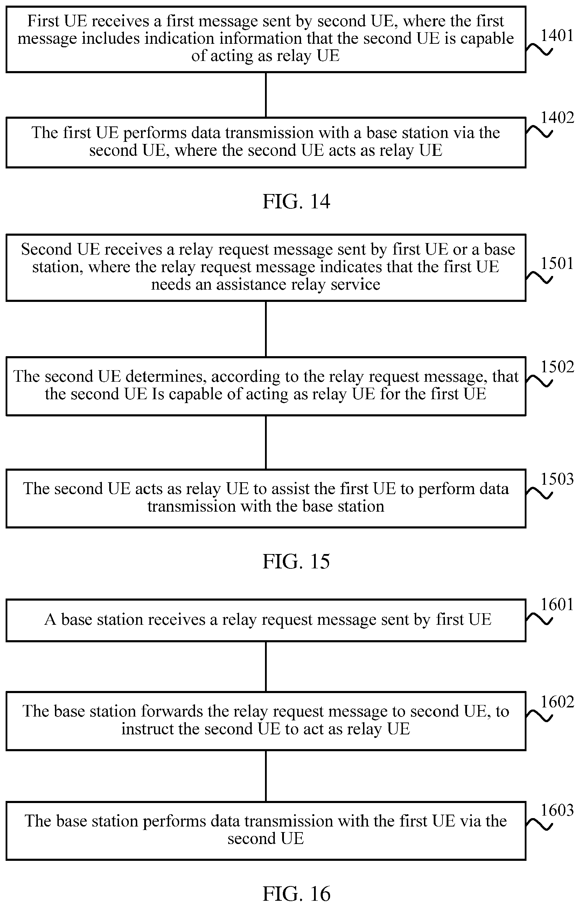

FIG. 14 is a flowchart of a data transmission method according to an embodiment of the present invention. The method shown in FIG. 14 is performed by the first UE, and includes:
1401: First user equipment UE receives a first message sent by second UE, where the first message includes indication information that the second UE is capable of acting as relay UE.
1402: The first UE performs data transmission with a base station via the second UE, where the second UE acts as relay UE.

In the embodiments of the present invention, when first UE is unable to directly perform data transmission with a base station, the first UE uses second UE as relay UE according to indication information sent by the second UE that the second UE is capable of acting as relay UE, and then is unable to perform data transmission via the relay UE. Therefore, a success rate of data transmission can be ensured, and further transmission efficiency can be increased.

Optionally, in an embodiment,
the first message in 1401 may be a broadcast message. That is, the first message is sent by the second UE in a D2D broadcast manner.

Accordingly, for 1401, refer to the description of 902 in the embodiment in FIG. 9. To avoid repetition, details are not described herein again.

The first message (the broadcast message) may further include at least one of the following: quality information of a channel between the second UE and the base station, a current relay service status of the second UE, an ID of a cell on which the second UE currently camps, or an ID of a base station of a cell on which the second UE currently camps.

The first message (the broadcast message) further includes at least one of the following: the second UE is located within a coverage range of the base station; the second UE has established an RRC connection to the base station; signal quality of the RRC connection established by the second UE to the base station is higher than a preset signal quality threshold; a a remaining battery electricity quantity of the second UE is greater than a preset electricity quantity threshold; transmit power of the second UE is less than a preset transmit power threshold; or the second UE receives, from the base station, information instructing the second UE to send a broadcast message.

It may be understood that, before 1402 (before or after 1401), the method may further include: determining, by the first UE, to start an assistance relay service.

Specifically, when the first UE is unable to directly perform data transmission with the base station, the first UE determines to start the assistance relay service.

That the first UE is unable to directly perform data transmission with the base station may include:
the first UE is not located within a coverage range of the base station; or
signal quality between the first UE and the base station is lower than the preset signal quality threshold; or
an electricity quantity of the first UE is less than a preset electricity quantity threshold; or
the first UE is unable to establish an RRC connection to the base station.

That the first UE is unable to establish an RRC connection to the base station may include: access to a cell is forbidden or a service of a cell is restricted, and consequently the first UE is unable to normally establish an RRC connection; or an RLF occurs in the first UE and RRC reestablishment cannot be completed, and consequently, the first UE is unable to normally establish an RRC connection.

It can be seen that, in this embodiment of the present invention, when the first UE determines to start the assistance relay service, the first UE may not camp on any cell. Alternatively, the first UE camps on a cell, but a serving base station of the first UE is not the foregoing base station. Alternatively, a serving base station of the first UE is the foregoing base station, but signal quality between the first UE and the base station is excessively low or an electricity quantity of the first UE is excessively small.

Specifically, for a process of starting the assistance relay service, refer to the description of 903 in the embodiment in FIG. 9. To avoid repetition, details are not described herein again.

Optionally, in another embodiment,
after 1401, the method may further include: sending, by the first UE, a relay request message; and receiving, by the first UE, a relay response message sent by the second UE. In this case, the first message in 1401 may be a broadcast message. That is, the first message is sent by the second UE in a D2D broadcast manner.

Herein, for the sending, by the first UE, a relay request message, refer to the description of 9031 in the embodiment of FIG. 10. For the receiving, by the first UE, a relay response message sent by the second UE, refer to the description of 9032 in the embodiment of FIG. 10. For 1401, refer to the description of 902 in the embodiment of FIG. 9. To avoid repetition, details are not described herein again.

The first message (the broadcast message) may further include at least one of the following: quality information of a channel between the second UE and the base station, a current relay service status of the second UE, an ID of a cell on which the second UE currently camps, or an ID of a base station of a cell on which the second UE currently camps.

The first message (the broadcast message) further includes at least one of the following: the second UE is located within a coverage range of the base station; the second UE has established an RRC connection to the base station; signal quality of the RRC connection established by the second UE to the base station is higher than a preset signal quality threshold; a a remaining battery electricity quantity of the second UE is greater than a preset electricity quantity threshold; transmit power of the second UE is less than a preset transmit power threshold; or the second UE receives, from the base station, information instructing the second UE to send a broadcast message.

Specifically, the first UE may send the relay request message to the second UE in an end-to-end form by using a D2D link between the first UE and the second UE.

Herein, the relay request message may include a source address and a destination address of data that needs assistance relay and that is of the first UE. The relay request message may further include at least one of the following: indication information of the data that needs assistance relay, a magnitude of a data amount of the data that needs assistance relay, a buffer size of the data that needs assistance relay, a service type of the data that needs assistance relay, an ID of relay UE to be preferentially selected, an ID of a cell on which the first UE 20 last camps, an ID of a base station of a cell on which the first UE 20 last camps, or a target ID of group communication.

Optionally, before the sending, by the first UE, a relay request message, the method may further include: receiving, by the first UE, D2D relay configuration information sent by the base station. The D2D relay configuration information is sent by the base station in a broadcast manner, or the D2D relay configuration information is sent by the base station by using dedicated signaling.

For example, the dedicated signaling may be radio resource control (Radio Resource Control, RRC) signaling.

The D2D relay configuration information includes: a parameter needed by the first UE to start the assistance relay service.

In this embodiment of the present invention, the parameter related to the D2D UE relay configuration may include: a dedicated D2D relay transmission resource used by the relay UE, a parameter related to a condition for starting D2D relay by remote UE, a parameter related to a D2D relay task borne by the relay UE, or the like.

For example, the D2D relay configuration information may include a signal quality limit (which may be referred to as a first threshold herein) of cellular transmission, or may include a quantity of times of retransmission (which may be referred to as a second threshold herein) for which the remote UE sends a relay request message, or may include a limit (which may be referred to as a third threshold herein) of a remaining electricity quantity for performing relay by the relay UE.

Specifically, for a process of receiving, by the first UE, the D2D relay configuration information sent by the base station, refer to the description of 901 in the embodiment in FIG. 10. To avoid repetition, details are not described herein again.

It may be understood that, before 1402 (before or after 1401), the method may further include: determining, by the first UE, to start an assistance relay service.

Specifically, when the first UE is unable to directly perform data transmission with the base station, determining, by the first UE, to start the assistance relay service. For detailed description, refer to 903. Details are not described herein again.

Optionally, if the first UE receives relay response messages sent by multiple UEs, where the multiple UEs include the second UE. In this case, after the first UE receives the relay response messages, the method may further include: determining the second UE in the multiple UEs as the relay UE.

Specifically, for a process of determining the second UE in the multiple UEs as the relay UE, refer to the description of 9033 in the embodiment in FIG. 10. To avoid repetition, details are not described herein again.

Optionally, in another embodiment,
before 1401, the method may include: sending, by first UE, a relay request message. In this case, accordingly, the first message in 1401 is a response message of the relay request message. That is, the first message is a relay response message.

Specifically, for a process of the sending, by first UE, a relay request message, refer to the description of 303 in the embodiment of FIG. 3. For 1401, refer to the description of 305 in the embodiment of FIG. 3. To avoid repetition, details are not described herein again.

The first message (the relay response message) is sent by the second UE in a D2D broadcast manner. The first message (the relay response message) sent by the second UE 31 may include at least one of the following: quality information of a channel between the second UE and the base station, quality information of a D2D channel between the second UE and the first UE, a current relay service status of the second UE, a parameter for establishing a D2D connection between the first UE and the second UE, an identity ID of a cell on which the second UE currently camps, or an ID of a base station of a cell on which the second UE currently camps.

Optionally, before the sending, by the first UE, a relay request message, the method may further include: receiving, by the first UE, D2D relay configuration information sent by the base station. The D2D relay configuration information is sent by the base station in a broadcast manner, or the D2D relay configuration information is sent by the base station by using dedicated signaling.

Specifically, for a process of receiving, by the first UE, the D2D relay configuration information sent by the base station, refer to the description of 301 in the embodiment in FIG. 3. To avoid repetition, details are not described herein again.

Optionally, in this embodiment of the present invention, before the sending, by the first UE, a relay request message, the method may further include: when the first UE is unable to directly perform data transmission with the base station, determining, by the first UE, to start an assistance relay service.

That the first UE is unable to directly perform data transmission with the base station may include:
the first UE is not located within a coverage range of the base station; or
signal quality between the first UE and the base station is lower than the preset signal quality threshold; or
an electricity quantity of the first UE is less than a preset electricity quantity threshold; or
the first UE is unable to establish an RRC connection to the base station.

That the first UE is unable to establish an RRC connection to the base station may include: access to a cell is forbidden or a service of a cell is restricted, and consequently the first UE is unable to normally establish an RRC connection; or an RLF occurs in the first UE and RRC reestablishment cannot be completed, and consequently, the first UE is unable to normally establish an RRC connection.

It can be seen that, in this embodiment of the present invention, when the first UE determines to start the assistance relay service, the first UE may not camp on any cell. Alternatively, the first UE camps on a cell, but a serving base station of the first UE is not the foregoing base station. Alternatively, a serving base station of the first UE is the foregoing base station, but signal quality between the first UE and the base station is excessively low or an electricity quantity of the first UE is excessively small.

Specifically, for a process of starting the assistance relay service, refer to the description of 302 in the embodiment in FIG. 3. To avoid repetition, details are not described herein again.

Optionally, the first UE may send the relay request message in a D2D broadcast manner.

Alternatively, the first UE may use maximum transmit power to send the relay request message.

The first UE 20 may send the relay request message by using a pre-configured D2D sending resource pool.

In this case, in this embodiment of the present invention, the relay request message may include a source address and a destination address of data that needs assistance relay and that is of the first UE. The relay request message may further include at least one of the following: indication information of data that needs assistance relay, a magnitude of a data amount of data that needs assistance relay, a buffer size of data that needs assistance relay, a service type of data that needs assistance relay, an ID of relay UE to be preferentially selected, an ID of a cell on which the first UE last camps, an ID of a base station of a cell on which the first UE last camps, or a target ID of group communication.

If a cell on which the first UE currently camps can be determined, the cell on which the first UE last camps is the cell on which the first UE currently camps. If the first UE currently camps on no cell, the cell on which the first UE last camps is a cell on which the first UE last camps before a current moment.

The target ID of the group communication is a group ID (Group ID).

In addition, the relay request message may further include a data direction of the data that needs assistance relay, and the data direction may be uplink and/or downlink.

In addition, the relay request message may further include a service type that needs assistance relay. For example, the service type may be directly performing communication with the base station, indirectly performing communication with the base station via another base station, or the like.

In this embodiment of the present invention, optionally, a timer may be started at the same time when the first UE sends the relay request message. It is assumed that duration that is set by the timer is T1. In this case, if no relay response message corresponding to the relay request message is received during the time period T1 after the first UE sends the relay request message, the first UE 20 may retransmit the relay request message. The quantity of times of retransmission herein may be preset, or may be configured by the base station (that is, the second threshold). Herein, T1 may be zero.

It may be understood that, if after a quantity of times of sending a relay request message reaches the quantity of times of retransmission, the first UE still receives no relay response message corresponding to the relay request message, it indicates that no available relay UE is around the first UE.

Optionally, 1401 may include: receiving, by the first UE, at least one relay response message sent by at least one UE, where the at least one relay response message is in a one-to-one correspondence with the at least one UE, and the at least one UE includes the second UE. In this case, after 1401 and before 1402, the method may further include: using, by the first UE, the second UE in the at least one UE as the relay UE.

Specifically, the first UE may select the second UE from the at least one UE based on a predetermined criterion according to the first message (the relay response message), and use the second UE as the relay UE.

The predetermined criterion may include: a feedback of the relay response message is the fastest and/or a delay of the relay response message is the smallest.

Alternatively, the predetermined criterion may include at least one of the following: D2D channel quality between the one UE and the first UE 20 is the optimal, D2D channel quality between the one UE and a Uu interface of the base station 10 is the optimal, or a quantity of relay services that are currently provided by the one UE is the smallest.

It should be understood that, the first UE may select the relay UE according to another piece of information. For example, the first UE may perform the selection according to at least one of the following information: a type of a service that can be provided, a current relay service status (whether another remote-UE is served, a quantity of remote-UEs that are currently served, a type or priority of a service that is currently provided, and so on), an ID of a cell on which the one UE camps, an ID of a base station to which the one UE is connected, or the like.

For example, the first UE may use UE, which is unable to perform direct communication with the base station, as the relay UE. If there is no UE that is unable to perform direct communication with the base station, the first UE may use UE, which performs communication with the base station via another base station, as the relay UE. When subsequently detecting that there is UE that is unable to perform direct communication with the base station, the first UE may change the relay UE to the UE that is unable to perform direct communication with the base station.

For example, if the D2D channel quality between the second UE and the first UE is the optimal, cellular channel quality between the second UE and the base station is the optimal, and an ID of a base station connected to the second UE is the same as the destination address of the data of the first UE that needs relay, the first UE may use the second UE as the relay UE.

Optionally, if the relay request message sent by the first UE includes an ID of preferentially selected relay UE, and in 1401, the first UE receives a first message (a relay response message) that is sent by UE corresponding to the ID, the first UE may directly use the UE as the relay UE.

Specifically, for a process of determining the second UE as the relay UE by the first UE, refer to the description of 306 in the embodiment in FIG. 3. To avoid repetition, details are not described herein again.

Optionally, in another embodiment,
if a serving base station of the first UE is the foregoing base station, before 1401, the method may include: sending, by the first UE, the relay request message to the base station, so that the base station forwards the relay request message to the second UE. In this case, accordingly, the first message in 1401 is a response message of the relay request message. That is, the first message is a relay response message.

The relay request message includes at least one of the following information: a relay request reason, an ID of a service requested to be preferentially guaranteed, or location information and buffer status information of the first UE.

A form of the relay request message is any one of the following: application layer signaling, NAS signaling, RRC signaling, a CE at a MAC layer, or PHY layer signaling.

Specifically, for that first UE may send the relay request message to the base station, refer to the description of 1103 in the embodiment shown in FIG. 11 or FIG. 12. For 1401, refer to the description of 1106 in the embodiment shown in FIG. 11 or FIG. 12. To avoid repetition, details are not described herein again.

Optionally, a timer may be started at the same time when the first UE sends the relay request message to the base station. Refer to the foregoing description about the timer. Details are not described herein again.

Optionally, before the first UE sends the relay request message to the base station, the method may further include: determining to start a relay service. Refer to the description of 1102 in the embodiment shown in FIG. 11 or FIG. 12.

After 1401 and before 1402, the method may further include a process of determining the second UE as the relay UE. Refer to the description of 11061 in the embodiment shown in FIG. 12. Details are not described herein again.

In this embodiment of the present invention, 1402 may include: sending, by the first UE, uplink data to the second UE in a D2D communication manner, so that the second UE forwards the uplink data to the base station; and/or receiving, by the first UE, downlink data from the second UE in a D2D communication manner, where the downlink data is received by the second UE from the base station.

The first UE may send the uplink data to the second UE by using a pre-configured D2D resource pool.

Alternatively, if the relay response message includes a D2D resource pool, the first UE may send the uplink data to the second UE by using the D2D resource pool. The D2D resource pool is a D2D resource pool that is allocated by the base station to the second UE in a broadcast manner or by using dedicated signaling, or the D2D resource pool is a D2D resource pool selected by the second UE.

The first UE may receive the downlink data from the second UE by using the D2D resource pool.

In this embodiment of the present invention, for 1402, refer to the description of 309 in the embodiment of FIG. 3, the description of 904 in the embodiment of FIG. 9 or FIG. 10, and the description of 1107 in the embodiment of FIG. 11 or FIG. 12. To avoid repetition, details are not described herein again.

Optionally, in an embodiment, after the method shown in FIG. 14, the method may further include: sending, by the first UE, a relay release request message to the second UE; and releasing, by the first UE, the D2D connection to the second UE.

Optionally, in another embodiment, after the method shown in FIG. 14, the method may further include: sending, by the first UE, a relay release request message to the second UE; receiving, by the first UE, a relay release response message sent by the second UE; and releasing, by the first UE, the D2D connection to the second UE.

Optionally, in another embodiment, after the method shown in FIG. 14, the method may further include: receiving, by first UE, a relay release request message sent by the second UE; and releasing, by the first UE, the D2D connection to the second UE according to the relay release request message.

Optionally, in another embodiment, after the method shown in FIG. 14, the method may further include: receiving, by first UE, a relay release request message sent by the second UE; sending, by the first UE, a relay release response message to the second UE; and releasing, by the first UE, the D2D connection to the second UE according to the relay release request message.

Optionally, in another embodiment, after the method shown in FIG. 14, the method may further include: sending, by the first UE, a relay release request message to the base station; and releasing, by the first UE, the D2D connection to the second UE.

Optionally, in another embodiment, after the method shown in FIG. 14, the method may further include: sending, by the first UE, a relay release request message to the base station; receiving, by the first UE, a relay release response message sent by the base station; and releasing, by the first UE, the D2D connection to the second UE.

Optionally, in another embodiment, after the method shown in FIG. 14, the method may further include: receiving, by the first UE, a relay release request message sent by the base station; and releasing, by the first UE, the D2D connection to the second UE according to the relay release request message.

Optionally, in another embodiment, after the method shown in FIG. 14, the method may further include: receiving, by the first UE, a relay release request message sent by the base station; sending, by the first UE, a relay release response message to the base station; and releasing, by the first UE, the D2D connection to the second UE according to the relay release request message.

Specifically, in a process of releasing executed after the method shown in FIG. 14, refer to the releasing process executed by the first UE in the embodiments of FIG. 4 to FIG. 8. To avoid repetition, details are not described herein again.

In this way, in this embodiment of the present invention, the first UE releases a D2D connection for relay transmission in time, so that a resource usage ratio can be ensured. For example, it can be ensured that the second UE provides the relay service for another remote UE in time.

FIG. 15 is a flowchart of a data transmission method according to another embodiment of the present invention. The method shown in FIG. 15 is performed by second UE, and includes:
1501: The second UE receives a relay request message sent by first UE or a base station, where the relay request message indicates that the first UE needs an assistance relay service.
1502: The second UE determines, according to the relay request message, that the second UE is capable of acting as relay UE for the first UE.
1503: The second UE acts as relay UE to assist the first UE to perform data transmission with the base station.

In this embodiment of the present invention, after second UE determines, according to a relay request message, that a relay service can be provided for first UE. Further, the second UE acts as relay UE to assist the first UE to perform data transmission with a base station, so that data transmission efficiency can be ensured.

Optionally, before 1501, the method may further include: receiving, by the second UE, device to device D2D relay configuration information sent by the base station. The D2D relay configuration information is sent by the base station in a broadcast manner, or the D2D relay configuration information is sent by the base station by using dedicated signaling.

For example, the dedicated signaling may be radio resource control (Radio Resource Control, RRC) signaling.

The D2D relay configuration information includes: a parameter needed to start the assistance relay service.

In this embodiment of the present invention, the parameter related to the D2D UE relay configuration may include: a dedicated D2D relay transmission resource used by the relay UE, a parameter related to a condition for starting D2D relay by remote UE, a parameter related to a D2D relay task borne by the relay UE, or the like.

For example, the D2D relay configuration information may include a signal quality limit (which may be referred to as a first threshold herein) of cellular transmission, or may include a quantity of times of retransmission (which may be referred to as a second threshold herein) for which the remote UE sends a relay request message, or may include a limit (which may be referred to as a third threshold herein) of a remaining electricity quantity for performing relay by the relay UE.

Optionally, in an embodiment,
the relay request message is sent by the first UE by using a D2D link, the relay request message includes data that needs assistance relay, and a destination address of the data that needs assistance relay is the base station.

The data that needs assistance relay may be understood as uplink data that the first UE needs to sent to the base station. In this case, accordingly, in 1503, the second UE sends the data that needs assistance relay to the base station.

Optionally, the relay request message may further include at least one of the following: indication information of the data that needs assistance relay, a magnitude of a data amount of the data that needs assistance relay, a buffer size of the data that needs assistance relay, a service type of the data that needs assistance relay, an identity ID of relay UE to be preferentially selected, an ID of a cell on which the first UE last camps, an ID of a base station of a cell on which the first UE last camps, a destination cell ID of relay data, or a target ID of group communication.

It may be understood that, in 1502, the second UE may determine, according to the relay request message, the D2D relay configuration information, some information about the second UE, and the like, whether the second UE is capable of providing a relay service.

Optionally, in 1502, a criterion that is used during the determining that the second UE is capable of acting as relay UE for the first UE includes at least one of the following:
a network status of the second UE, channel quality between the second UE and the base station, power usage of the second UE, a remaining electricity quantity of the second UE, buffer space of the second UE, device to device D2D channel quality between the second UE and the first UE, or a relative distance between the second UE and the first UE.

Specifically, for 1501, refer to the description of 1303 in the embodiment of FIG. 13. For 1502, refer to the description of 1304 in the embodiment of FIG. 13. For 1503, refer to the description of 1305 in the embodiment of FIG. 13. To avoid repetition, details are not described herein again.

Optionally, in another embodiment,
1501 may include: receiving, by the second UE, the relay request message sent by the base station, where the relay request message includes an ID of the first UE.

That is, the relay request message is sent by the base station by using a downward cellular link. The relay request message further includes: at least one of the following: a request reason, an ID of a service requested to be preferentially guaranteed, or location information and buffer status information of the first UE.

Optionally, after 1502, the method may further include: sending, by the second UE, a relay response message to the first UE.

The relay response message may include at least one of the following: quality information of a channel between the second UE and the base station, quality information of a device to device D2D channel between the second UE and the first UE, a current relay service status of the second UE, an identity ID of a cell on which the second UE currently camps, or an ID of a base station of a cell on which the second UE currently camps.

Optionally, the relay response message may further include a D2D resource pool. The D2D resource pool is a D2D resource pool that is allocated to the second UE by the base station in a broadcast manner or by using dedicated signaling, or the D2D resource pool is a D2D resource pool selected by the second UE.

Optionally, before 1503, the method may further include: performing, by the second UE, relay preparation.

The relay preparation includes: if the second UE is in an idle state, establishing, by the second UE, a radio resource control RRC connection; if the second UE is in a connected state but currently out-of-synchronization in the uplink, executing, by the second UE, a random access channel RACH process, to keep the uplink synchronized; or if the second UE is in a connected state and is normally connected to the base station but does not have an uplink transmission resource, requesting, by the second UE, an uplink transmission resource from the base station.

The requesting, by the second UE, the uplink transmission resource from the base station includes: sending, by the second UE, a relay sending resource request message to the base station; and receiving, by the second UE, relay sending resource scheduling information sent by the base station.

The relay sending resource request message may include at least one of the following: identity information of data of the first UE that needs relay, a magnitude of a data amount of data of the first UE that needs relay, a source address and/or a destination address of data of the first UE that needs relay, a quality of service QoS class of data of the first UE that needs relay, or signal quality information of the first UE.

Accordingly, 1503 may include:
receiving, by the second UE in a device to device D2D communication manner, uplink data sent by the first UE, and sending the uplink data to the base station; and/or
receiving, by the second UE, downlink data sent by the base station, and sending the downlink data to the first UE in a device to device D2D communication manner.

Specifically, for the sending, by the second UE, a relay response message to the first UE, refer to the description of 1106 in the embodiment of FIG. 11 or FIG. 12. For 1501, refer to the description of 1104 in the embodiment of FIG. 11 or the description of 11041 in the embodiment of FIG. 12. For 1502, refer to the description of 1105 in the embodiment of FIG. 11 or FIG. 12. For 1503, refer to the description of 1107 in the embodiment of FIG. 13. To avoid repetition, details are not described herein again.

Optionally, in an embodiment, after the method shown in FIG. 15, the method may further include: receiving, by second UE, a relay release request message sent by the first UE; and releasing, by the second UE, a D2D connection to the first UE according to the relay release request message.

Optionally, in another embodiment, after the method shown in FIG. 15, the method may further include: receiving, by second UE, a relay release request message sent by the first UE; sending, by the second UE, a relay release response message to the first UE; and releasing, by the second UE, a D2D connection to the first UE according to the relay release request message.

Optionally, in another embodiment, after the method shown in FIG. 15, the method may further include: sending, by the second UE, a relay release request message to the first UE; and releasing, by the second UE, a D2D connection to the first UE.

Optionally, in another embodiment, after the method shown in FIG. 15, the method may further include: sending, by the second UE, a relay release request message to the first UE; receiving, by the second UE, a relay release response message sent by the first UE; and releasing, by the second UE, a D2D connection to the first UE.

Optionally, in another embodiment, after the method shown in FIG. 15, the method may further include: receiving, by the second UE, a relay release request message sent by the base station; and releasing, by the second UE, a D2D connection to the first UE according to the relay release request message.

Optionally, in another embodiment, after the method shown in FIG. 15, the method may further include: receiving, by the second UE, a relay release request message sent by the base station; sending, by the second UE, a relay release response message to the base station; and releasing, by the second UE, a D2D connection to the first UE according to the relay release request message.

Specifically, in a process of releasing executed after the method shown in FIG. 15, refer to the releasing process executed by the second UE in the embodiments of FIG. 4 to FIG. 8. To avoid repetition, details are not described herein again.

In this way, in this embodiment of the present invention, the second UE releases a D2D connection for relay transmission in time, so that a resource usage ratio can be ensured. For example, it can be ensured that the relay service is provided for another remote UE in time.

Optionally, in another embodiment,
1501 may include: receiving, by the second UE, the relay request message sent by the first UE. That is, the relay request message is sent by the first UE by using the D2D link.

The relay request message further includes at least one of the following: indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

Optionally, the relay request message may be sent by the first UE in a D2D broadcast manner.

Optionally, after 1502, the method may further include: sending, by the second UE, a relay response message to the first UE.

The relay response message may include at least one of the following: quality information of a channel between the second UE and the base station, quality information of a device to device D2D channel between the second UE and the first UE, a current relay service status of the second UE, an identity ID of a cell on which the second UE currently camps, or an ID of a base station of a cell on which the second UE currently camps.

Optionally, the relay response message may further include a D2D resource pool. The D2D resource pool is a D2D resource pool that is allocated to the second UE by the base station in a broadcast manner or by using dedicated signaling, or the D2D resource pool is a D2D resource pool selected by the second UE.

Optionally, before 1503, the method may further include: performing, by the second UE, relay preparation.

The relay preparation includes: if the second UE is in an idle state, establishing, by the second UE, a radio resource control RRC connection; if the second UE is in a connected state but currently out-of-synchronization in the uplink, executing, by the second UE, a random access channel RACH process, to keep the uplink synchronized; or if the second UE is in a connected state and is normally connected to the base station but does not have an uplink transmission resource, requesting, by the second UE, an uplink transmission resource from the base station.

The requesting, by the second UE, the uplink transmission resource from the base station includes: sending, by the second UE, a relay sending resource request message to the base station; and receiving, by the second UE, relay sending resource scheduling information sent by the base station.

The relay sending resource request message may include at least one of the following: identity information of data of the first UE that needs relay, a magnitude of a data amount of data of the first UE that needs relay, a source address and/or a destination address of data of the first UE that needs relay, a quality of service QoS class of data of the first UE that needs relay, or signal quality information of the first UE.

Accordingly, 1503 may include:
receiving, by the second UE in a device to device D2D communication manner, uplink data sent by the first UE, and sending the uplink data to the base station; and/or
receiving, by the second UE, downlink data sent by the base station, and sending the downlink data to the first UE in a device to device D2D communication manner.

Specifically, for 1501, refer to the description of 303 in the embodiment of FIG. 3. For 1502, refer to the description of 304 in the embodiment of FIG. 3. For the sending, by the second UE, a relay response message to the first UE, refer to the description of 305 in the embodiment of FIG. 3. For the performing, by the second UE, relay preparation, refer to the description of 308 in the embodiment of FIG. 3. For 1503, refer to the description of 309 in the embodiment of FIG. 3. To avoid repetition, details are not described herein again.

Optionally, after the method shown in FIG. 15, the method may further include: releasing, by the second UE, a D2D connection to the first UE. Specifically, in a process of releasing executed after the method shown in FIG. 15, refer to the releasing process executed by the second UE in the embodiments of FIG. 4 to FIG. 8. To avoid repetition, details are not described herein again.

Optionally, in another embodiment,
before 1501, the method may further include: receiving, by the second UE, device to device D2D relay configuration information sent by the base station, where the D2D relay configuration information is sent by the base station in a broadcast manner, or the D2D relay configuration information is sent by the base station by using dedicated signaling; and when the second UE determines, according to the D2D relay configuration information, that the second UE has a relay service providing capability, sending, by the second UE, a broadcast message in a D2D broadcast manner, where the broadcast message includes indication information that is used to indicate that the second UE is capable of acting as relay UE. Accordingly, 1501 may include: receiving, by the second UE, the relay request message sent by the first UE. That is, the relay request message is sent by the first UE by using the device to device D2D link.

The broadcast message may further include at least one of the following: quality information of a channel between the second UE and the base station, a current relay service status of the second UE, an ID of a cell on which the second UE currently camps, or an ID of a base station of a cell on which the second UE currently camps.

The broadcast message may further include at least one of the following: the second UE is located within a coverage range of the base station; the second UE has established a radio resource control RRC connection to the base station; signal quality of the radio resource control RRC connection established by the second UE to the base station is higher than a preset signal quality threshold; a a remaining battery electricity quantity of the second UE is greater than a preset electricity quantity threshold; transmit power of the second UE is less than a preset transmit power threshold; or the second UE receives, from the base station, information instructing the second UE to send a broadcast message.

The relay request message in 1501 further includes at least one of the following: indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

Optionally, after 1502, the method may further include: sending, by the second UE, a relay response message to the first UE.

It may be understood that, before 1503, the method may include: performing, by the second UE, relay preparation. After 1503, refer to the foregoing description about a process of releasing, by the second UE, a connection to the first UE, and details are not described herein again.

Specifically, for the sending, by the second UE, a broadcast message, refer to the description of 902 in the embodiment of FIG. 10. For 1501, refer to the description of 9031 in the embodiment of FIG. 10. For a process of sending the relay response message by the second UE, refer to the description of 9032 in the embodiment of FIG. 10. To avoid repetition, details are not described herein again.

FIG. 16 is a flowchart of a data transmission method according to another embodiment of the present invention. The method shown in FIG. 16 is performed by a base station, and includes:
1601: The base station receives a relay request message sent by first UE.
1602: The base station forwards the relay request message to second UE, to instruct the second UE to act as relay UE.
1603: The base station performs data transmission with the first UE via the second UE.

In this embodiment of the present invention, a base station specifies second UE as relay UE, and the second UE can assist in data transmission between the base station and first UE, so that transmission efficiency is increased.

The relay request message in 1601 further includes at least one of the following: a request reason, an ID of a service requested to be preferentially guaranteed, or location information and buffer status information of the first UE.

A form of the relay request message is any one of the following: application layer signaling, NAS signaling, RRC signaling, a CE at a MAC layer, or PHY layer signaling.

In this embodiment of the present invention, 1603 may include: the receiving, by the base station, uplink data from the second UE, where the uplink data is received by the second UE from the first UE; and/or sending, by the base station, downlink data to the second UE, so that the second UE forwards the downlink data to the first UE.

Optionally, the method shown in FIG. 16 may further include: sending, by the base station, D2D relay configuration information. Specifically, the D2D relay configuration information may be sent in a broadcast manner.

Specifically, for a process of sending the D2D relay configuration information by the base station, refer to the description of 1102 in the embodiment of FIG. 11 or FIG. 12. For 1601, refer to the description of 1103 in the embodiment of FIG. 11 or FIG. 12. For 1602, refer to the description of 1104 in the embodiment of FIG. 11 or the description of 11041 in the embodiment of FIG. 12. To avoid repetition, details are not described herein again.

Optionally, in an embodiment, after the method shown in FIG. 16, the method may further include: sending, by the base station, a relay release request message to the second UE, so that the second UE releases a D2D connection to the first UE.

Optionally, in another embodiment, after the method shown in FIG. 16, the method may further include: sending, by the base station, a relay release request message to the second UE; and receiving, by the base station, a relay release response message sent by the second UE, so that the second UE releases a D2D connection to the first UE.

Optionally, in another embodiment, after the method shown in FIG. 16, the method may further include: sending, by the base station, the relay release request message to the first UE and the second UE, so that the first UE releases the D2D connection to the second UE, and the second UE releases the D2D connection to the first UE.

Optionally, in another embodiment, after the method shown in FIG. 16, the method may further include: sending, by the base station, the relay release request message to the first UE and the second UE; and receiving, by the base station, relay release response messages sent by the first UE and the second UE. Therefore, the first UE releases the D2D connection to the second UE, and the second UE releases the D2D connection to the first UE.

Optionally, in another embodiment, after the method shown in FIG. 16, the method may further include: receiving, by the base station, a relay release request message sent by the second UE; and forwarding, by the base station, the relay release request message to the first UE, so that the first UE releases a D2D connection to the second UE.

Optionally, in another embodiment, after the method shown in FIG. 16, the method may further include: receiving, by the base station, a relay release request message sent by the first UE; and forwarding, by the base station, the relay release request message to the second UE, so that the second UE releases the D2D connection to the first UE.

Optionally, in another embodiment, after the method shown in FIG. 16, the method may further include: receiving, by the base station, a relay release request message sent by the first UE; and sending, by the base station, the relay release response message to the first UE.

Specifically, in a process of releasing executed after the method shown in FIG. 16, refer to the releasing process executed by the base station in the embodiments of FIG. 4 to FIG. 8. To avoid repetition, details are not described herein again.

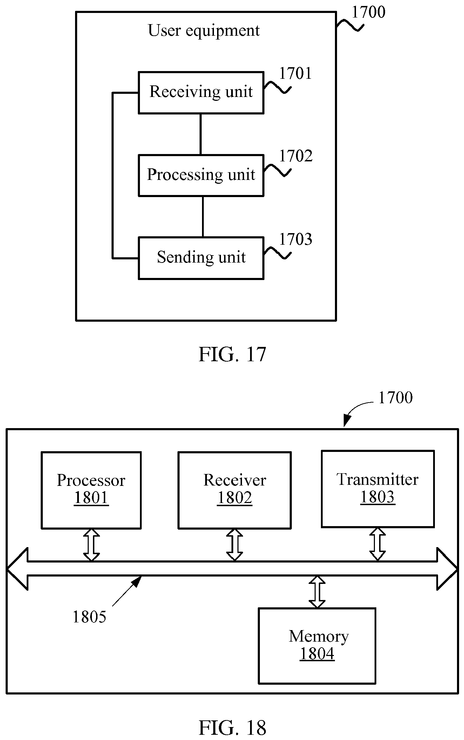

FIG. 17 is a structural block diagram of user equipment according to an embodiment of the present invention. The user equipment (UE) 1700 shown in FIG. 17 is first UE, and includes a receiving unit 1701 and a processing unit 1702.

The receiving unit 1701 is configured to receive a first message sent by second UE, where the first message includes indication information that the second UE is capable of acting as relay UE.

The processing unit 1702 is configured to perform data transmission with a base station via the second UE, where the second UE acts as relay UE.

In this embodiment of the present invention, when first UE is unable to directly perform data transmission with a base station, the first UE uses second UE as relay UE according to indication information sent by the second UE that the second UE is capable of acting as relay UE, and then is unable to perform data transmission via the relay UE. Therefore, a success rate of data transmission can be ensured, and further transmission efficiency can be increased.

Optionally, the first UE 1700 further includes a sending unit 1703.

Optionally, in an embodiment, the sending unit 1703 is configured to send a relay request message, where the first message is a relay response message.

Optionally, in another embodiment, the receiving unit 1701 is further configured to: receive device to device D2D relay configuration information sent by the base station. The D2D relay configuration information is sent by the base station in a broadcast manner, or the D2D relay configuration information is sent by the base station by using dedicated signaling.

Optionally, in another embodiment, the receiving unit 1701 is specifically configured to: receive at least one relay response message sent by at least one UE, where the at least one relay response message is in a one-to-one correspondence with the at least one UE, and the at least one UE includes the second UE. The processing unit 1702 is further configured to: determine the second UE in the at least one UE as the relay UE.

Optionally, in another embodiment, the relay response message includes at least one of the following: quality information of a channel between the second UE and the base station, quality information of a D2D channel between the second UE and the first UE, a current relay service status of the second UE, a parameter for establishing a D2D connection between the first UE and the second UE, an identity ID of a cell on which the second UE currently camps, or an ID of a base station of a cell on which the second UE currently camps.

Optionally, in another embodiment, the processing unit 1702 is specifically configured to: select the second UE from the at least one UE based on a predetermined criterion according to the relay response message, and determine the second UE as the relay UE.

Optionally, in another embodiment, the predetermined criterion may include: a feedback of the relay response message is the fastest and/or a delay of the relay response message is the smallest.

Optionally, in another embodiment, the sending unit 1703 is specifically configured to: send the relay request message to the base station, so that the base station forwards the relay request message to the second UE. The relay request message includes at least one of the following information: a relay request reason, an identity ID of a service requested to be preferentially guaranteed, or location information and buffer status information of the first UE.

Optionally, in another embodiment, the sending unit 1703 is configured to send a relay request message; and the receiving unit 1701 is further configured to receive a relay response message sent by the second UE.

Optionally, in another embodiment, the first message further includes at least one of the following: quality information of a channel between the second UE and the base station, a current relay service status of the second UE, an identity ID of a cell on which the second UE currently camps, or an ID of a base station of a cell on which the second UE currently camps.

Optionally, in another embodiment, the relay request message includes at least one of the following: indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

Optionally, in another embodiment, the sending unit 1703 is further configured to: retransmit the relay request message when the relay response message is not received within a time period that is set by a timer of the processing unit 1702.

Optionally, in another embodiment, the first message is sent by the second UE in a D2D broadcast manner, and the first message further includes at least one of the following: quality information of a channel between the second UE and the base station, a current relay service status of the second UE, an identity ID of a cell on which the second UE currently camps, or an ID of a base station of a cell on which the second UE currently camps.

Optionally, in another embodiment, the first message further includes at least one of the following:
the second UE is located within a coverage range of the base station;
the second UE has established a radio resource control RRC connection to the base station;
channel quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

Optionally, in another embodiment, the processing unit 1702 is further configured to: when the first UE is unable to directly perform data transmission with the base station, determine to start an assistance relay service.

Optionally, in another embodiment, that the first UE is unable to directly perform data transmission with the base station includes: the first UE is not located within a service range of the base station; or signal quality between the first UE and the base station is lower than the preset signal quality threshold; or an electricity quantity of the first UE is less than a preset electricity quantity threshold; or the first UE is unable to establish a radio resource control RRC connection to the base station.

Optionally, in another embodiment, the processing unit 1702 is specifically configured to: control the sending unit 1703 to send uplink data to the second UE in a device to device D2D communication manner, so that the second UE forwards the uplink data to the base station; and/or
control the receiving unit 1701 to receive downlink data from the second UE in a device to device D2D communication manner, where the downlink data is received by the second UE from the base station.

Optionally, in another embodiment, the sending unit 1703 is specifically configured to: send the uplink data to the second UE by using a pre-configured D2D resource pool.

Optionally, in another embodiment, the first message includes a D2D resource pool, where the D2D resource pool is a D2D resource pool that is allocated to the second UE by the base station in a broadcast manner or by using dedicated signaling, or the D2D resource pool is a D2D resource pool selected by the second UE;
the sending unit is specifically configured to send the uplink data to the second UE by using the D2D resource pool; and the receiving unit 1701 is specifically configured to receive the downlink data from the second UE by using the D2D resource pool.

Optionally, in another embodiment, the sending unit 1703 is further configured to send a relay release request message to the second UE. The processing unit 1702 is further configured to release the D2D connection to the second UE.

Optionally, in another embodiment, the receiving unit 1701 is further configured to receive a relay release response message sent by the second UE.

Optionally, in another embodiment, the receiving unit 1701 is further configured to receive a relay release request message sent by the second UE. The processing unit 1702 is further configured to release the D2D connection to the second UE according to the relay release request message.

Optionally, in another embodiment, the sending unit 1703 is further configured to send a relay release response message to the second UE.

Optionally, in another embodiment, the first UE is located within the coverage range of the base station; and the sending unit 1703 is further configured to send a relay release request message to the base station. The processing unit 1702 is further configured to release the D2D connection to the second UE.

Optionally, in another embodiment, the receiving unit 1701 is further configured to receive a relay release response message sent by the base station.

Optionally, in another embodiment, the first UE is located within the coverage range of the base station; and the receiving unit 1701 is further configured to receive a relay release request message sent by the base station. The processing unit 1702 is further configured to release the D2D connection to the second UE according to the relay release request message.

Optionally, in another embodiment, the sending unit 1703 is further configured to send a relay release response message to the base station.

It should be noted that, in this embodiment of the present invention, the receiving unit 1701 may be implemented by using a receiver, the processing unit 1702 may be implemented by using a processor, and the sending unit 1703 may be implemented by using a transmitter. As shown in FIG. 18, the first UE 1700 may include a processor 1801, a receiver 1802, a transmitter 1803, and a memory 1804. The memory 1804 may be configured to store code, and the like that is executed by the processor 1801.

Components in the first UE 1700 are coupled together by using a bus system 1805. The bus system 1805 further includes a power supply bus, a control bus, and a status signal bus in addition to a data bus.

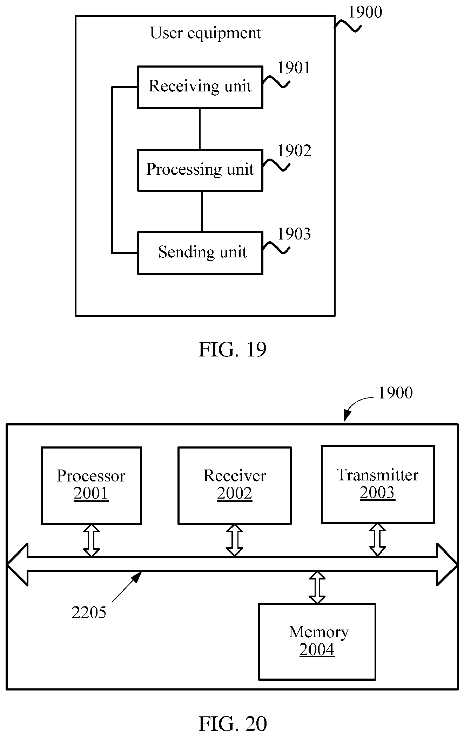

FIG. 19 is a structural block diagram of user equipment according to another embodiment of the present invention. The user equipment (UE) shown in FIG. 19 is second UE 1900, and includes a receiving unit 1901 and a processing unit 1902.

The receiving unit 1901 is configured for the UE to receive a relay request message sent by first UE or a base station, where the relay request message indicates that the first UE needs an assistance relay service.

The processing unit 1902 is configured to determine, according to the relay request message, that the second UE is capable of acting as relay UE for the first UE.

The processing unit 1902 is further configured to use the second UE as relay UE to assist the first UE to perform data transmission with the base station.

In this embodiment of the present invention, after the second UE determines, according to the relay request message, that it is capable of providing a relay service for the first UE, further, the second UE acts as the relay UE to assist the first UE to perform data transmission with the base station, so that data transmission efficiency can be ensured.

In addition, the second UE 1900 further includes a sending unit 1903.

Optionally, in an embodiment, the sending unit 1903 is configured to send a relay response message to the first UE.

Optionally, in another embodiment, the relay request message is sent by the base station by using a downward cellular link, where the relay request message further includes: at least one of the following: a request reason, an ID of a service requested to be preferentially guaranteed, or location information and buffer status information of the first UE.

Optionally, in another embodiment, the relay request message is sent by the first UE by using a device to device D2D link, and the relay request message includes at least one of the following: indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

Optionally, in another embodiment, the receiving unit 1901 is further configured to receive device to device D2D relay configuration information sent by the base station, where the D2D relay configuration information is sent by the base station in a broadcast manner, or the D2D relay configuration information is sent by the base station by using dedicated signaling. When the processing unit 1902 determines, according to the D2D relay configuration information, that the second UE has a relay service providing capability, the sending unit 1903 is further configured to send a broadcast message in a D2D broadcast manner, where the broadcast message includes indication information that is used to indicate that the second UE is capable of acting as relay UE.

Optionally, in another embodiment, the broadcast message further includes at least one of the following: quality information of a channel between the second UE and the base station, a current relay service status of the second UE, an identity ID of a cell on which the second UE currently camps, or an ID of a base station of a cell on which the second UE currently camps.

Optionally, in another embodiment, the broadcast message further includes at least one of the following:
the second UE is located within a coverage range of the base station;
the second UE has established a radio resource control RRC connection to the base station;
signal quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

Optionally, in another embodiment, the relay response message includes at least one of the following:
the quality information of a channel between the second UE and the base station, quality information of a device to device D2D channel between the second UE and the first UE, the current relay service status of the second UE, the identity ID of the cell on which the second UE currently camps, or the ID of the base station in the cell on which the second UE currently camps.

Optionally, in another embodiment, the relay response message further includes a D2D resource pool, where the D2D resource pool is a D2D resource pool that is allocated to the second UE by the base station in a broadcast manner or by using dedicated signaling, or the D2D resource pool is a D2D resource pool selected by the second UE.

Optionally, in another embodiment, the processing unit 1902 is further configured to perform relay preparation.

Optionally, in an embodiment, the processing unit 1902 is specifically configured to:
if the second UE is in an idle state, establish a radio resource control RRC connection;
if the second UE is in a connected state but currently out-of-synchronization in the uplink, execute a random access channel RACH process, to keep the uplink synchronized; or
if the second UE is in a connected state and is normally connected to the base station but does not have an uplink transmission resource, request an uplink transmission resource from the base station.

Optionally, in another embodiment, the requesting, by the second UE, the uplink transmission resource from the base station includes: sending, by the sending unit 1902, a relay sending resource request message to the base station; and receiving, by the receiving unit 1901, relay sending resource scheduling information sent by the base station.

Optionally, in another embodiment, the relay sending resource request message may include at least one of the following: identity information of data of the first UE that needs relay, a magnitude of a data amount of data of the first UE that needs relay, a source address and/or a destination address of data of the first UE that needs relay, a quality of service QoS class of data of the first UE that needs relay, or signal quality information of the first UE.

Optionally, in an embodiment, the processing unit 1902 is specifically configured to:
control the receiving unit 1901 to receive, in a device to device D2D communication manner, uplink data sent by the first UE, and control the sending unit 1903 to send the uplink data to the base station; and/or
control the receiving unit 1901 to receive downlink data sent by the base station, and control the sending unit 1903 to send the downlink data to the first UE in a device to device D2D communication manner.

Optionally, in another embodiment, the receiving unit 1901 is further configured to receive a relay release request message sent by the first UE. The processing unit 1902 is further configured to release the D2D connection to the first UE according to the relay release request message.

Optionally, in another embodiment, the sending unit 1903 is further configured to send a relay release response message to the first UE.

Optionally, in another embodiment, the sending unit 1903 is further configured to send a relay release request message to the first UE; and the processing unit 1902 is further configured to release a D2D connection to the first UE.

Optionally, in another embodiment, the receiving unit 1901 is further configured to receive a relay release response message sent by the first UE.

Optionally, in another embodiment, the receiving unit 1901 is further configured to receive a relay release request message sent by the base station; and the processing unit 1902 is further configured to release a D2D connection to the first UE according to the relay release request message.

Optionally, in another embodiment, the sending unit 1903 is further configured to send a relay release response message to the base station.

Optionally, in another embodiment, the relay request message is sent by the first UE by using a device to device D2D link, the relay request message includes data that needs assistance relay, and a destination address of the data that needs assistance relay is the base station.

Optionally, in another embodiment, the relay request message may further include at least one of the following: indication information of the data that needs assistance relay, a magnitude of a data amount of the data that needs assistance relay, a buffer size of the data that needs assistance relay, a service type of the data that needs assistance relay, an identity ID of relay UE to be preferentially selected, an ID of a cell on which the first UE last camps, an ID of a base station of a cell on which the first UE last camps, a destination cell ID of relay data, or a target ID of group communication.

Optionally, in another embodiment, the processing unit 1902 is specifically configured to: forward the data that needs assistance relay to the base station.

Optionally, in another embodiment, a criterion that is used by the processing unit 1902 to determine that the second UE is capable of acting as relay UE for the first UE includes at least one of the following: a network status of the second UE, channel quality between the second UE and the base station, power usage of the second UE, a remaining electricity quantity of the second UE, buffer space of the second UE, device to device D2D channel quality between the second UE and the first UE, or a relative distance between the second UE and the first UE.

It should be noted that, in this embodiment of the present invention, the receiving unit 1901 may be implemented by using a receiver, the processing unit 1902 may be implemented by using a processor, and the sending unit 1903 may be implemented by using a transmitter. As shown in FIG. 20, the second UE 1900 may include a processor 2001, a receiver 2002, a transmitter 2003, and a memory 2004. The memory 2004 may be configured to store code, and the like that is executed by the processor 2001.

Components in the second UE 1900 are coupled together by using a bus system 2005. The bus system 2005 further includes a power supply bus, a control bus, and a status signal bus in addition to a data bus.

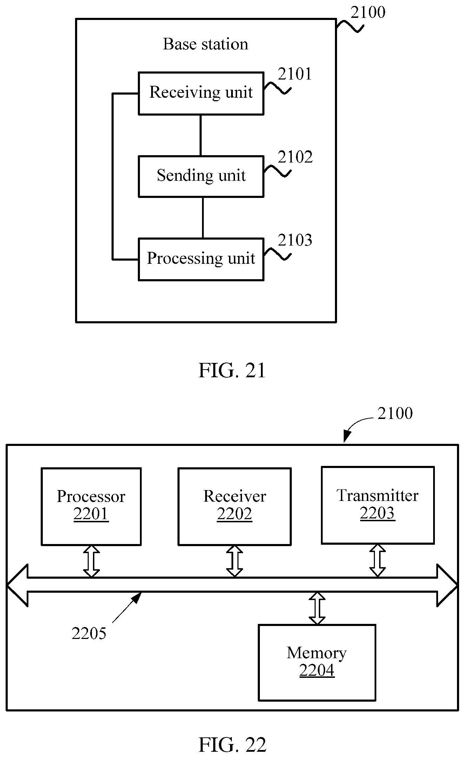

FIG. 21 is a structural block diagram of a base station according to an embodiment of the present invention. The base station 2100 shown in FIG. 21 includes a receiving unit 2101, a sending unit 2102, and a processing unit 2103.

The receiving unit 2101 is configured to receive a relay request message sent by first UE.

The sending unit 2102 is configured to forward the relay request message to second UE, to instruct the second UE to act as relay UE.

The processing unit 2103 is configured to perform data transmission with the first UE via the second UE.

In this embodiment of the present invention, the base station specifies second UE as relay UE, and the second UE can assist in data transmission between the base station and first UE, so that transmission efficiency is increased.

Optionally, in an embodiment, the relay request message further includes at least one of the following: a request reason, an identity ID of a service requested to be preferentially guaranteed, or location information and buffer status information of the first UE.

Optionally, in another embodiment, the processing unit 2103 is specifically configured to: control the receiving unit 2101 to receive uplink data from the second UE, where the uplink data is received by the second UE from the first UE; and/or
control the sending unit 2102 to send downlink data to the second UE, so that the second UE forwards the downlink data to the first UE.

Optionally, in another embodiment, the sending unit 2102 is further configured to send a relay release request message to the second UE, so that the second UE releases a D2D connection to the first UE.

Optionally, in another embodiment, the receiving unit 2101 is further configured to receive a relay release response message sent by the second UE.

Optionally, in another embodiment, the receiving unit 2101 is further configured to send the relay release request message to the first UE, so that the first UE releases the D2D connection to the second UE.

Optionally, in another embodiment, the receiving unit 2101 is further configured to receive a relay release response message sent by the first UE.

Optionally, in another embodiment, the receiving unit 2101 is further configured to receive a relay release request message sent by the first UE.

Optionally, in another embodiment, the sending unit 2102 is further configured to send a relay release response message to the first UE.

Optionally, in another embodiment, the receiving unit 2101 is further configured to receive a relay release request message sent by the second UE; and the sending unit 2102 is further configured to forward the relay release request message to the first UE, so that the first UE releases a D2D connection to the second UE.

Optionally, in another embodiment, the sending unit 2102 is further configured to send a relay release response message to the second UE.

It should be noted that, in this embodiment of the present invention, the receiving unit 2101 may be implemented by using a receiver; the sending unit 2102 may be implemented by using a transmitter; and the processing unit 2103 may be implemented by using a processor. As shown in FIG. 22, the base station 2100 may include a processor 2201, a receiver 2202, a transmitter 2203, and a memory 2204. The memory 2204 may be configured to store code, and the like that is executed by the processor 2201.

Components in the base station 2100 are coupled together by using a bus system 2205. The bus system 2205 further includes a power supply bus, a control bus, and a status signal bus in addition to a data bus.

It should be noted that, the processor in this embodiment of the present invention may be an integrated circuit chip and has a signal processing capability. In an implementation process, each step of the foregoing method embodiments may be implemented by using a hardware integrated logic circuit in the processor or by an instruction in a software form. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logical device, a discrete gate or transistor logic device, or a discrete hardware component, The processor may implement or execute methods, steps, and logical block diagrams disclosed in the embodiments of the present invention. The general-purpose processor may be a microprocessor or the processor may be any conventional processor or the like. Steps of the methods disclosed with reference to the embodiments of the present invention may be directly executed and completed by a hardware decoding processor, or may be executed and completed by using a combination of hardware and software modules in the decoding processor. The software module may be located in a mature storage medium in the art, such as a random access memory, a flash memory, a read-only memory, a programmable read-only memory, or an electrically-erasable programmable memory, or a register. The storage medium is located in the memory, and the processor reads information in the memory and completes the steps of the foregoing methods in combination with hardware of the processor.

It should be noted that the memory in the embodiments of the present invention may be a volatile memory or a nonvolatile memory, or may include both a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. RAMs in many forms such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM) may be used, which is an example rather than limitative description. It should be noted that, the memory in the system and method described in this specification intends to include, but is not limited to, these memories and any other memory of a suitable type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
receiving, by first user equipment UE, a first message sent by second UE, wherein the first message comprises indication information that the second UE is capable of acting as relay UE; and
performing, by the first UE, data transmission with a base station via the second UE, wherein the second UE acts as relay UE.

2. The method according to claim 1, wherein before the receiving, by first UE, a first message sent by second UE, the method further comprises: sending, by the first UE, a relay request message, wherein
the first message is a relay response message.

3. The method according to claim 2, wherein before the sending, by the first UE, a relay request message, the method further comprises:
receiving, by the first UE, device to device D2D relay configuration information sent by the base station, wherein
the D2D relay configuration information is sent by the base station in a broadcast manner, or the D2D relay configuration information is sent by the base station by using dedicated signaling.

4. The method according to claim 3, wherein
the receiving, by first UE, a first message sent by second UE comprises:
receiving, by the first UE, at least one relay response message sent by at least one UE, wherein the at least one relay response message is in a one-to-one correspondence with the at least one UE, and the at least one UE comprises the second UE; and
before the performing, by the first UE, data transmission with the base station via the second UE, the method further comprises:
determining, by the first UE, the second UE in the at least one UE as the relay UE.

5. The method according to claim 4, wherein the relay response message comprises at least one of the following:
quality information of a channel between the second UE and the base station, quality information of a D2D channel between the second UE and the first UE, a current relay service status of the second UE, a parameter for establishing a D2D connection between the first UE and the second UE, an identity ID of a cell on which the second UE currently camps, or an ID of a base station of a cell on which the second UE currently camps.

6. The method according to claim 4 or 5, wherein the determining, by the first UE, the second UE in the at least one UE as the relay UE comprises:
selecting, by the first UE, the second UE from the at least one UE based on a predetermined criterion according to the relay response message, and determining the second UE as the relay UE.

7. The method according to claim 6, wherein the predetermined criterion comprises: a feedback of the relay response message is the fastest and/or a delay of the relay response message is the smallest.

8. The method according to any one of claims 2 to 7, wherein the sending, by the first UE, a relay request message comprises:
sending, by the first UE, the relay request message to the base station, so that the base station forwards the relay request message to the second UE, wherein
the relay request message comprises at least one of the following information: a relay request reason, an identity ID of a service requested to be preferentially guaranteed, or location information and buffer status information of the first UE.

9. The method according to claim 1, wherein after the receiving, by first UE, a first message sent by second UE, the method further comprises:
sending, by the first UE, a relay request message; and
receiving, by the first UE, a relay response message sent by the second UE.

10. The method according to claim 9, wherein the first message further comprises at least one of the following:
quality information of a channel between the second UE and the base station, a current relay service status of the second UE, an identity ID of a cell on which the second UE currently camps, or an ID of a base station of a cell on which the second UE currently camps.

11. The method according to any one of claims 2 to 10, wherein the relay request message comprises at least one of the following:
indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

12. The method according to any one of claims 2 to 11, wherein the method further comprises:
retransmitting, by the first UE, the relay request message when the first UE does not receive the relay response message within a time period that is set by a timer.

13. The method according to claim 1, wherein the first message is sent by the second UE in a D2D broadcast manner, and the first message further comprises at least one of the following:
quality information of a channel between the second UE and the base station, a current relay service status of the second UE, an identity ID of a cell on which the second UE currently camps, or an ID of a base station of a cell on which the second UE currently camps.

14. The method according to claim 13, wherein the first message further comprises at least one of the following:
the second UE is located within a coverage range of the base station;
the second UE has established a radio resource control RRC connection to the base station;
channel quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

15. The method according to any one of claims 1 to 14, wherein before the performing, by the first UE, data transmission with a base station via the second UE, the method further comprises:
when the first UE is unable to directly perform data transmission with the base station, determining, by the first UE, to start an assistance relay service.

16. The method according to claim 15, wherein that the first UE is unable to directly perform data transmission with the base station comprises:
the first UE is not located within a service range of the base station; or
signal quality between the first UE and the base station is lower than the preset signal quality threshold; or
an electricity quantity of the first UE is less than a preset electricity quantity threshold; or
the first UE is unable to establish a radio resource control RRC connection to the base station.

17. The method according to any one of claims 1 to 16, wherein the performing, by the first UE, data transmission with the base station via the second UE comprises:
sending, by the first UE, uplink data to the second UE in a device to device D2D communication manner, so that the second UE forwards the uplink data to the base station; and/or
receiving, by the first UE, downlink data from the second UE in a device to device D2D communication manner, wherein the downlink data is received by the second UE from the base station.

18. The method according to claim 17, wherein the sending, by the first UE, uplink data to the second UE in a D2D communication manner comprises:
sending, by the first UE, the uplink data to the second UE by using a pre-configured D2D resource pool.

19. The method according to claim 17, wherein the first message comprises a D2D resource pool, wherein the D2D resource pool is a D2D resource pool that is allocated to the second UE by the base station in a broadcast manner or by using dedicated signaling, or the D2D resource pool is a D2D resource pool selected by the second UE;
the sending, by the first UE, uplink data to the second UE in a D2D communication manner comprises:
sending, by the first UE, the uplink data to the second UE by using the D2D resource pool; and
the receiving, by the first UE, downlink data from the second UE in a D2D communication manner comprises:
receiving, by the first UE, the downlink data from the second UE by using the D2D resource pool.

20. The method according to any one of claims 1 to 19, wherein after the performing, by the first UE, data transmission with the base station via the second UE, the method further comprises:
sending, by the first UE, a relay release request message to the second UE; and
releasing, by the first UE, the D2D connection to the second UE.

21. The method according to claim 20, wherein before the releasing, by the first UE, the D2D connection to the second UE, the method further comprises:
receiving, by the first UE, a relay release response message sent by the second UE.

22. The method according to any one of claims 1 to 19, wherein after the performing, by the first UE, data transmission with the base station via the second UE, the method further comprises:
receiving, by first UE, a relay release request message sent by the second UE; and
releasing, by the first UE, the D2D connection to the second UE according to the relay release request message.

23. The method according to claim 22, wherein before the releasing, by the first UE, the D2D connection to the second UE according to the relay release request message, the method further comprises:
sending, by the first UE, a relay release response message to the second UE.

24. The method according to any one of claims 1 to 19, wherein the first UE is located within the coverage range of the base station, and after the performing, by the first UE, data transmission with the base station via the second UE, the method further comprises:
sending, by the first UE, a relay release request message to the base station; and
releasing, by the first UE, the D2D connection to the second UE.

25. The method according to claim 24, wherein before the releasing, by the first UE, the D2D connection to the second UE, the method further comprises:
receiving, by the first UE, a relay release response message sent by the base station.

26. The method according to any one of claims 1 to 19, wherein the first UE is located within the coverage range of the base station, and after the performing, by the first UE, data transmission with the base station via the second UE, the method further comprises:
receiving, by the first UE, a relay release request message sent by the base station; and
releasing, by the first UE, the D2D connection to the second UE according to the relay release request message.

27. The method according to claim 26, wherein before the releasing, by the first UE, the D2D connection to the second UE according to the relay release request message, the method further comprises:
sending, by the first UE, a relay release response message to the base station.

28. A data transmission method, comprising:
receiving, by second user equipment UE, a relay request message sent by first UE or a base station, wherein the relay request message indicates that the first UE needs an assistance relay service;
determining, by the second UE according to the relay request message, that the second UE is capable of acting as relay UE for the first UE; and
acting, by the second UE, as relay UE to assist the first UE to perform data transmission with the base station.

29. The method according to claim 28, wherein after the determining that the second UE is capable of acting as relay UE for the first UE, the method further comprises:
sending, by the second UE, a relay response message to the first UE.

30. The method according to claim 29, wherein the relay request message is sent by the base station by using a downward cellular link, and the relay request message further comprises at least one of the following:
a request reason, an ID of a service requested to be preferentially guaranteed, or location information and buffer status information of the first UE.

31. The method according to claim 29, wherein the relay request message is sent by the first UE by using a device to device D2D link, and the relay request message comprises at least one of the following:
indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

32. The method according to claim 31, wherein before the receiving, by second UE, a relay request message sent by first UE, the method further comprises:
receiving, by the second UE, device to device D2D relay configuration information sent by the base station, wherein the D2D relay configuration information is sent by the base station in a broadcast manner, or the D2D relay configuration information is sent by the base station by using dedicated signaling; and
when the second UE determines, according to the D2D relay configuration information, that the second UE has a relay service providing capability, sending, by the second UE, a broadcast message in a D2D broadcast manner, wherein the broadcast message comprises indication information that is used to indicate that the second UE is capable of acting as relay UE.

33. The method according to claim 32, wherein the broadcast message further comprises at least one of the following:
quality information of a channel between the second UE and the base station, a current relay service status of the second UE, an identity ID of a cell on which the second UE currently camps, or an ID of a base station of a cell on which the second UE currently camps.

34. The method according to claim 32 or 33, wherein the broadcast message further comprises at least one of the following:
the second UE is located within a coverage range of the base station;
the second UE has established a radio resource control RRC connection to the base station;
signal quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

35. The method according to any one of claims 29 to 34, wherein the relay response message comprises at least one of the following:
quality information of a channel between the second UE and the base station, quality information of a device to device D2D channel between the second UE and the first UE, the current relay service status of the second UE, the identity ID of the cell on which the second UE currently camps, or the ID of the base station in the cell on which the second UE currently camps.

36. The method according to claim 35, wherein the relay response message further comprises a D2D resource pool, wherein the D2D resource pool is a D2D resource pool that is allocated to the second UE by the base station in a broadcast manner or by using dedicated signaling, or the D2D resource pool is a D2D resource pool selected by the second UE.

37. The method according to any one of claims 29 to 36, wherein before the acting, by the second UE, as relay UE to assist the first UE to perform data transmission with the base station, the method further comprises:
performing, by the second UE, relay preparation.

38. The method according to claim 37, wherein the relay preparation comprises:
if the second UE is in an idle state, establishing, by the second UE, a radio resource control RRC connection;
if the second UE is in a connected state but currently out-of-synchronization in the uplink, executing, by the second UE, a random access channel RACH process, to keep the uplink synchronized; or
if the second UE is in a connected state and is normally connected to the base station but does not have an uplink transmission resource, requesting, by the second UE, an uplink transmission resource from the base station.

39. The method according to claim 38, wherein the requesting, by the second UE, the uplink transmission resource from the base station comprises:
sending, by the second UE, a relay sending resource request message to the base station; and
receiving, by the second UE, relay sending resource scheduling information sent by the base station.

40. The method according to claim 39, wherein the relay sending resource request message may comprise at least one of the following:
identity information of data of the first UE that needs relay, a magnitude of a data amount of data of the first UE that needs relay, a source address and/or a destination address of data of the first UE that needs relay, a quality of service QoS class of data of the first UE that needs relay, or signal quality information of the first UE.

41. The method according to any one of claims 29 to 40, wherein the acting, by the second UE, as relay UE to assist the first UE to perform data transmission with the base station comprises:
receiving, by the second UE in a device to device D2D communication manner, uplink data sent by the first UE, and sending the uplink data to the base station; and/or
receiving, by the second UE, downlink data sent by the base station, and sending the downlink data to the first UE in a device to device D2D communication manner.

42. The method according to any one of claims 29 to 41, wherein after the acting, by the second UE, as relay UE to assist the first UE to perform data transmission with the base station, the method further comprises:
receiving, by second UE, a relay release request message sent by the first UE; and
releasing, by the second UE, a D2D connection to the first UE according to the relay release request message.

43. The method according to claim 42, wherein before the releasing a D2D connection to the first UE, the method further comprises:
sending, by the second UE, a relay release response message to the first UE.

44. The method according to any one of claims 29 to 41, wherein after the acting, by the second UE, as relay UE to assist the first UE to perform data transmission with the base station, the method further comprises:
sending, by the second UE, a relay release request message to the first UE; and
releasing, by the second UE, a D2D connection to the first UE.

45. The method according to claim 44, wherein before the releasing, by the second UE, a D2D connection to the first UE, the method further comprises:
receiving, by the second UE, a relay release response message sent by the first UE.

46. The method according to any one of claims 29 to 41, wherein after the acting, by the second UE, as relay UE to assist the first UE to perform data transmission with the base station, the method further comprises:
receiving, by the second UE, a relay release request message sent by the base station; and
releasing, by the second UE, a D2D connection to the first UE according to the relay release request message.

47. The method according to claim 46, wherein before the releasing a D2D connection to the first UE, the method further comprises:
sending, by the second UE, a relay release response message to the base station.

48. The method according to claim 28, wherein the relay request message is sent by the first UE by using a device to device D2D link, the relay request message comprises data that needs assistance relay, and a destination address of the data that needs assistance relay is the base station.

49. The method according to claim 48, wherein the relay request message further comprises at least one of the following:
indication information of the data that needs assistance relay, a magnitude of a data amount of the data that needs assistance relay, a buffer size of the data that needs assistance relay, a service type of the data that needs assistance relay, an identity ID of relay UE to be preferentially selected, an ID of a cell on which the first UE last camps, an ID of a base station of a cell on which the first UE last camps, an ID of a destination cell of relay data, or a target ID of group communication.

50. The method according to claim 48 or 49, wherein the acting, by the second UE, as relay UE to assist the first UE to perform data transmission with the base station comprises:
forwarding, by the second UE, the data that needs assistance relay to the base station.

51. The method according to any one of claims 28 to 50, wherein a criterion that is used during the determining that the second UE is capable of acting as relay UE for the first UE comprises at least one of the following:
a network status of the second UE, channel quality between the second UE and the base station, power usage of the second UE, a remaining electricity quantity of the second UE, buffer space of the second UE, device to device D2D channel quality between the second UE and the first UE, or a relative distance between the second UE and the first UE.

52. A data transmission method, comprising:
receiving, by a base station, a relay request message sent by first UE;
forwarding, by the base station, the relay request message to second UE, to instruct the second UE to act as relay UE; and
performing, by the base station, data transmission with the first UE via the second UE.

53. The method according to claim 52, wherein the relay request message further comprises at least one of the following:
a request reason, an identity ID of a service requested to be preferentially guaranteed, or location information and buffer status information of the first UE.

54. The method according to claim 52 or 53, wherein the performing, by the base station, data transmission with the first UE via the second UE comprises:
receiving, by the base station, uplink data from the second UE, wherein the uplink data is received by the second UE from the first UE; and/or
sending, by the base station, downlink data to the second UE, so that the second UE forwards the downlink data to the first UE.

55. The method according to any one of claims 52 to 54, wherein after the performing, by the base station, data transmission with the first UE via the second UE, the method further comprises:
sending, by the base station, a relay release request message to the second UE, so that the second UE releases a D2D connection to the first UE.

56. The method according to claim 55, further comprising:
receiving, by the base station, a relay release response message sent by the second UE.

57. The method according to claim 55, further comprising:
sending, by the base station, the relay release request message to the first UE, so that the first UE releases the D2D connection to the second UE.

58. The method according to claim 57, further comprising:
receiving, by the base station, a relay release response message sent by the first UE.

59. The method according to claim 55, wherein before the sending, by the base station, a relay release request message to the second UE, the method further comprises:
receiving, by the base station, a relay release request message sent by the first UE.

60. The method according to claim 59, further comprising:
sending, by the base station, a relay release response message to the first UE.

61. The method according to any one of claims 52 to 54, wherein after the performing, by the base station, data transmission with the first UE via the second UE, the method further comprises:
receiving, by the base station, a relay release request message sent by the second UE; and
forwarding, by the base station, the relay release request message to the first UE, so that the first UE releases a D2D connection to the second UE.

62. The method according to claim 61, further comprising:
sending, by the base station, a relay release response message to the second UE.

63. User equipment, wherein the user equipment UE is first UE, and comprises:
a receiving unit, configured to receive a first message sent by second UE, wherein the first message comprises indication information that the second UE is capable of acting as relay UE; and
a processing unit, configured to perform data transmission with a base station via the second UE, wherein the second UE acts as relay UE.

64. The user equipment according to claim 63, further comprising a sending unit, configured to send a relay request message, wherein
the first message is a relay response message.

65. The user equipment according to claim 64, wherein the receiving unit is further configured to: receive device to device D2D relay configuration information sent by the base station, wherein
the D2D relay configuration information is sent by the base station in a broadcast manner, or the D2D relay configuration information is sent by the base station by using dedicated signaling.

66. The user equipment according to claim 65, wherein
the receiving unit is specifically configured to: receive at least one relay response message sent by at least one UE, wherein the at least one relay response message is in a one-to-one correspondence with the at least one UE, and the at least one UE comprises the second UE; and
the processing unit is further configured to determine the second UE in the at least one UE as the relay UE.

67. The user equipment according to claim 66, wherein the relay response message comprises at least one of the following:
quality information of a channel between the second UE and the base station, quality information of a D2D channel between the second UE and the first UE, a current relay service status of the second UE, a parameter for establishing a D2D connection between the first UE and the second UE, an identity ID of a cell on which the second UE currently camps, or an ID of a base station of a cell on which the second UE currently camps.

68. The user equipment according to claim 66 or 67, wherein the processing unit is specifically configured to: select the second UE from the at least one UE based on a predetermined criterion according to the relay response message, and determine the second UE as the relay UE.

69. The user equipment according to claim 68, wherein the predetermined criterion comprises: a feedback of the relay response message is the fastest and/or a delay of the relay response message is the smallest.

70. The user equipment according to any one of claims 64 to 69, wherein the sending unit is specifically configured to: send the relay request message to the base station, so that the base station forwards the relay request message to the second UE, wherein
the relay request message comprises at least one of the following information: a relay request reason, an identity ID of a service requested to be preferentially guaranteed, or location information and buffer status information of the first UE.

71. The user equipment according to claim 63, further comprising a sending unit, configured to send a relay request message, wherein
the receiving unit is further configured to receive a relay response message sent by the second UE.

72. The user equipment according to claim 71, wherein the first message further comprises at least one of the following:
quality information of a channel between the second UE and the base station, a current relay service status of the second UE, an identity ID of a cell on which the second UE currently camps, or an ID of a base station of a cell on which the second UE currently camps.

73. The user equipment according to any one of claims 64 to 72, wherein the relay request message comprises at least one of the following:
indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

74. The user equipment according to any one of claims 64 to 73, wherein the sending unit is further configured to:
retransmit the relay request message when the relay response message is not received within a time period that is set by a timer of the processor.

75. The user equipment according to claim 63, wherein the first message is sent by the second UE in a D2D broadcast manner, and the first message further comprises at least one of the following:
quality information of a channel between the second UE and the base station, a current relay service status of the second UE, an identity ID of a cell on which the second UE currently camps, or an ID of a base station of a cell on which the second UE currently camps.

76. The user equipment according to claim 75, wherein the first message further comprises at least one of the following:
the second UE is located within a coverage range of the base station;
the second UE has established a radio resource control RRC connection to the base station;
channel quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

77. The user equipment according to any one of claims 63 to 76, wherein the processing unit is further configured to:
when the first UE is unable to directly perform data transmission with the base station, determine to start an assistance relay service.

78. The user equipment according to claim 77, wherein that the first UE is unable to directly perform data transmission with the base station comprises:
the first UE is not located within a service range of the base station; or
signal quality between the first UE and the base station is lower than the preset signal quality threshold; or
an electricity quantity of the first UE is less than a preset electricity quantity threshold; or
the first UE is unable to establish a radio resource control RRC connection to the base station.

79. The user equipment according to any one of claims 63 to 78, wherein the processing unit is specifically configured to:
control the sending unit to send uplink data to the second UE in a device to device D2D communication manner, so that the second UE forwards the uplink data to the base station; and/or
control the receiving unit to receive downlink data from the second UE in a device to device D2D communication manner, wherein the downlink data is received by the second UE from the base station.

80. The user equipment according to claim 79, wherein the sending unit is specifically configured to:
send the uplink data to the second UE by using a pre-configured D2D resource pool.

81. The user equipment according to claim 79, wherein the first message comprises a D2D resource pool, wherein the D2D resource pool is a D2D resource pool that is allocated to the second UE by the base station in a broadcast manner or by using dedicated signaling, or the D2D resource pool is a D2D resource pool selected by the second UE;
the sending unit is specifically configured to send the uplink data to the second UE by using the D2D resource pool; and
the receiving unit is specifically configured to receive the downlink data from the second UE by using the D2D resource pool.

82. The user equipment according to any one of claims 63 to 81, wherein
the sending unit is further configured to send a relay release request message to the second UE; and
the processing unit is further configured to release the D2D connection to the second UE.

83. The user equipment according to claim 82, wherein
the receiving unit is further configured to receive a relay release response message sent by the second UE.

84. The user equipment according to any one of claims 63 to 81, wherein
the receiving unit is further configured to receive a relay release request message sent by the second UE; and
the processing unit is further configured to release the D2D connection to the second UE according to the relay release request message.

85. The user equipment according to claim 84, wherein
the sending unit is further configured to send a relay release response message to the second UE.

86. The user equipment according to any one of claims 63 to 81, wherein the first UE is located within the coverage range of the base station;
the sending unit is further configured to send a relay release request message to the base station; and
the processing unit is further configured to release the D2D connection to the second UE.

87. The user equipment according to claim 86, wherein
the receiving unit is further configured to receive a relay release response message sent by the base station.

88. The user equipment according to any one of claims 63 to 81, wherein the first UE is located within the coverage range of the base station;
the receiving unit is further configured to receive a relay release request message sent by the base station; and
the processing unit is further configured to release the D2D connection to the second UE according to the relay release request message.

89. The user equipment according to claim 88, wherein
the sending unit is further configured to send a relay release response message to the base station.

90. User equipment, wherein the user equipment UE is second UE, and comprises:
a receiving unit, configured for the UE to receive a relay request message sent by first UE or a base station, wherein the relay request message indicates that the first UE needs an assistance relay service; and
a processing unit, configured to determine, according to the relay request message, that the second UE is capable of acting as relay UE for the first UE, wherein
the processing unit is further configured to use the second UE as relay UE to assist the first UE to perform data transmission with the base station.

91. The user equipment according to claim 90, further comprising a sending unit, configured to send a relay response message to the first UE.

92. The user equipment according to claim 91, wherein the relay request message is sent by the base station by using a downward cellular link, and the relay request message further comprises at least one of the following:
a request reason, an ID of a service requested to be preferentially guaranteed, or location information and buffer status information of the first UE.

93. The user equipment according to claim 91, wherein the relay request message is sent by the first UE by using a device to device D2D link, and the relay request message comprises at least one of the following:
indication information of data that needs assistance relay, a magnitude of a data amount of data that needs assistance relay, a buffer size of data that needs assistance relay, a service type of data that needs assistance relay, an identity ID of relay UE to be preferentially selected, an ID of a cell on which the first UE last camps, an ID of a base station of a cell on which the first UE last camps, or a target ID of group communication.

94. The user equipment according to claim 93, wherein
the receiving unit is further configured to receive device to device D2D relay configuration information sent by the base station, wherein the D2D relay configuration information is sent by the base station in a broadcast manner, or the D2D relay configuration information is sent by the base station by using dedicated signaling; and
when the processing unit determines, according to the D2D relay configuration information, that the second UE has a relay service providing capability, the sending unit is further configured to send a broadcast message in a D2D broadcast manner, wherein the broadcast message comprises indication information that is used to indicate that the second UE is capable of acting as relay UE.

95. The user equipment according to claim 94, wherein the broadcast message further comprises at least one of the following:
quality information of a channel between the second UE and the base station, a current relay service status of the second UE, an identity ID of a cell on which the second UE currently camps, or an ID of a base station of a cell on which the second UE currently camps.

96. The user equipment according to claim 94 or 95, wherein the broadcast message further comprises at least one of the following:
the second UE is located within a coverage range of the base station;
the second UE has established a radio resource control RRC connection to the base station;
signal quality of the radio resource control RRC connection that is established by the second UE to the base station is higher than a preset signal quality threshold;
a remaining battery electricity quantity of the second UE is greater than a preset electricity quantity threshold;
transmit power of the second UE is less than a preset transmit power threshold; or
the second UE receives information that is from the base station and that instructs the second UE to send a broadcast message.

97. The user equipment according to any one of claims 91 to 96, wherein the relay response message comprises at least one of the following:
quality information of a channel between the second UE and the base station, quality information of a device to device D2D channel between the second UE and the first UE, the current relay service status of the second UE, the identity ID of the cell on which the second UE currently camps, or the ID of the base station in the cell on which the second UE currently camps.

98. The user equipment according to claim 97, wherein the relay response message further comprises a D2D resource pool, wherein the D2D resource pool is a D2D resource pool that is allocated to the second UE by the base station in a broadcast manner or by using dedicated signaling, or the D2D resource pool is a D2D resource pool selected by the second UE.

99. The user equipment according to any one of claims 91 to 98, wherein the processing unit is further configured to: perform relay preparation.

100. The user equipment according to claim 99, wherein the processing unit is specifically configured to:
if the second UE is in an idle state, establish a radio resource control RRC connection;
if the second UE is in a connected state but currently out-of-synchronization in the uplink, execute a random access channel RACH process, to keep the uplink synchronized; or
if the second UE is in a connected state and is normally connected to the base station but does not have an uplink transmission resource, request an uplink transmission resource from the base station.

101. The user equipment according to claim 100, wherein the requesting the uplink transmission resource from the base station comprises:
sending, by the sending unit, a relay sending resource request message to the base station; and
receiving, by the receiving unit, relay sending resource scheduling information sent by the base station.

102. The user equipment according to claim 101, wherein the relay sending resource request message may comprise at least one of the following:
identity information of data of the first UE that needs relay, a magnitude of a data amount of data of the first UE that needs relay, a source address and/or a destination address of data of the first UE that needs relay, a quality of service QoS class of data of the first UE that needs relay, or signal quality information of the first UE.

103. The user equipment according to any one of claims 91 to 102, wherein the processing unit is specifically configured to:
control the receiving unit to receive, in a device to device D2D communication manner, uplink data sent by the first UE, and control the sending unit to send the uplink data to the base station; and/or
control the receiving unit to receive downlink data sent by the base station, and control the sending unit to send the downlink data to the first UE in a device to device D2D communication manner.

104. The user equipment according to any one of claims 91 to 103, wherein
the receiving unit is further configured to receive a relay release request message sent by the first UE; and
the processing unit is further configured to release a D2D connection to the first UE according to the relay release request message.

105. The user equipment according to claim 104, wherein
the sending unit is further configured to send a relay release response message to the first UE.

106. The user equipment according to any one of claims 91 to 103, wherein
the sending unit is further configured to send a relay release request message to the first UE; and the processing unit is further configured to release a D2D connection to the first UE.

107. The user equipment according to claim 106, wherein
the receiving unit is further configured to receive a relay release response message sent by the first UE.

108. The user equipment according to any one of claims 91 to 103, wherein
the receiving unit is further configured to receive a relay release request message sent by the base station; and
the processing unit is further configured to release a D2D connection to the first UE according to the relay release request message.

109. The user equipment according to claim 108, wherein
the sending unit is further configured to send a relay release response message to the base station.

110. The user equipment according to claim 90, wherein the relay request message is sent by the first UE by using a device to device D2D link, the relay request message comprises data that needs assistance relay, and a destination address of the data that needs assistance relay is the base station.

111. The user equipment according to claim 110, wherein the relay request message further comprises at least one of the following:
indication information of the data that needs assistance relay, a magnitude of a data amount of the data that needs assistance relay, a buffer size of the data that needs assistance relay, a service type of the data that needs assistance relay, an identity ID of relay UE to be preferentially selected, an ID of a cell on which the first UE last camps, an ID of a base station of a cell on which the first UE last camps, an ID of a destination cell of relay data, or a target ID of group communication.

112. The user equipment according to claim 110 or 111, wherein the processing unit is specifically configured to:
forward the data that needs assistance relay to the base station.

113. The user equipment according to any one of claims 90 to 112, wherein a criterion that is used by the processing unit to determine that the second UE is capable of acting as relay UE for the first UE comprises at least one of the following:
a network status of the second UE, channel quality between the second UE and the base station, power usage of the second UE, a remaining electricity quantity of the second UE, buffer space of the second UE, device to device D2D channel quality between the second UE and the first UE, or a relative distance between the second UE and the first UE.

114. A data transmission base station, comprising:
a receiving unit, configured to receive a relay request message sent by first UE;
a sending unit, configured to forward the relay request message to second UE, to instruct the second UE to act as relay UE; and
a processing unit, configured to perform data transmission with the first UE via the second UE.

115. The base station according to claim 114, wherein the relay request message further comprises at least one of the following:
a request reason, an identity ID of a service requested to be preferentially guaranteed, or location information and buffer status information of the first UE.

116. The base station according to claim 114 or 115, wherein the processing unit is specifically configured to:
control the receiving unit to receive uplink data from the second UE, wherein the uplink data is received by the second UE from the first UE; and/or
control the sending unit to send downlink data to the second UE, so that the second UE forwards the downlink data to the first UE.

117. The base station according to any one of claims 114 to 116, wherein
the sending unit is further configured to send a relay release request message to the second UE, so that the second UE releases a D2D connection to the first UE.

118. The base station according to claim 117, wherein
the receiving unit is further configured to receive a relay release response message sent by the second UE.

119. The user equipment according to claim 117, wherein
the receiving unit is further configured to send the relay release request message to the first UE, so that the first UE releases the D2D connection to the second UE.

120. The base station according to claim 119, wherein
the receiving unit is further configured to receive a relay release response message sent by the first UE.

121. The base station according to claim 117, wherein
the receiving unit is further configured to receive a relay release request message sent by the first UE.

122. The base station according to claim 121, wherein
the sending unit is further configured to send a relay release response message to the first UE.

123. The base station according to any one of claims 114 to 116, wherein
the receiving unit is further configured to receive a relay release request message sent by the second UE; and
the sending unit is further configured to forward the relay release request message to the first UE, so that the first UE releases a D2D connection to the second UE.

124. The base station according to claim 123, wherein
the sending unit is further configured to send a relay release response message to the second UE.
